# EUROPÄISCHE PATENTSCHRIFT

(11) **EP 3 878 592 B1**
(45) Veröffentlichungstag und Bekanntmachung des Hinweises auf die Patenterteilung: **04.09.2024**
(21) Anmeldenummer: 20163056.3
(22) Anmeldetag: 13.03.2020
(51) Int. Cl.: B23K 11/30, B23Q 3/155

(54) **KAPPENMAGAZIN UND KAPPENMAGAZINEINHEIT**
CAP MAGAZINE AND CAP MAGAZINE UNIT
MAGASIN DE CAPSULES ET UNITÉ DE MAGASIN DE CAPSULES

(43) Veröffentlichungstag der Anmeldung: 15.09.2021
(73) Patentinhaber: Lutz Precision, K.S., 84104 Bratislava (SK)
(72) Erfinder: Matak, Marek, Bratislava 841 04 (SK)
(74) Vertreter: Grünecker Patent- und Rechtsanwälte PartG mbB

(56) Entgegenhaltungen:
- EP-A1- 2 072 170
- CN-U- 204 800 139
- FR-A1- 3 065 384
- JP-A- 2015 120 173

## Beschreibung

Die vorliegende Erfindung betrifft ein Kappenmagazin gemäß dem Oberbegriff des Anspruchs 1 und eine Kappenmagazineinheit gemäß Anspruch 12.

### Stand der Technik

DE 100 15 768 A1 offenbart eine Vorrichtung zum automatisierten Wechsel von Elektrodenkappen an Schweißelektrodenschäften mit einer an einer Gestellsäule befestigten Kappenlöseeinrichtung und mit einem Kappenmagazin. Das Kappenmagazin ist als Trommelmagazin ausgebildet und an der Gestellsäule befestigt, wobei das Kappenmagazin Kappenaufnahmetaschen aufweist, die auf kreisbogenförmigen Bahnen angeordnet sind.

Das Kappenmagazin kann dabei beidseitig befüllbar sein, so dass zum Aufziehen neuer Kappen auf einen Elektrodenschaft kein Drehen der die Elektroden tragenden Zangen erforderlich ist, da der eine Elektrodenschaft von der einen Seite und der andere Elektrodenschaft von der anderen Seite in das Magazin einfahren kann.

DE 10 2005 035 915 B3 offenbart einen Punktschweißkappenwechsler mit einem Kappenabzieher und zwei Kappenmagazinen, wobei die Kappenmagazine die Punktschweißkappen jeweils in einem runden Kappenträger zirkular angeordnet gerichtet orientiert halten und durch eine Vorschubkraft jeweils nacheinander einzeln an einen Anschlag in eine Zugriffstellung befördert werden.

Das Kappenmagazin enthält jeweils einen Kappenträger, der, von einer Federdose angetrieben, mit seiner Vorschubkraft jeweils eine der Kappen an den Anschlag drückt. Die Federdose kann eine Spiral- oder eine Wendelfeder enthalten, deren Enden einerseits an der Federdose und andererseits an dem Kappenträger festgelegt sind.

CN 204 800 139 U, welche die Grundlage für den Oberbegriff von Anspruch 1 bildet, offenbart ein Elektrodenkappenmagazin, in dem Elektrodenkappen durch eine Vorrichtung, die eine Feder und einen Schiebeblock umfasst, mit Drehung um einen Dorn entlang eines Lagergangs jeweils in einen Ausbringbereich verbracht werden.

FR 3 065 384 A1 offenbart einen Zufuhrzylinder für Endkappen einer Schweißklemme und ein Speichermagazin, das einen solchen Zylinder umfasst. Der Zufuhrzylinder umfasst eine Drehplatte und eine Vielzahl von Aufnahmeelementen für je eine Endkappe, die sich radial von der Drehplatte in zwei Ebenen erstrecken.

EP 2 072 170 A1 offenbart eine Magazineinheit zur Aufnahme von Kappen eines Punktschweißkappenwechslers, die mindestens ein Magazin und eine Trägerplatte umfasst. An der Trägerplatte befindet sich für jedes Magazin an der Entnahmeposition für die Kappen ein Anschlag, an den eine in der Magazindose befindliche Kappe federbelastet anschlägt.

JP 2015 120173 A offenbart ein Magazin mit einem Gehäuse, das auf einem Umfang eine Vielzahl von Speicheröffnungen zur Aufnahme von Elektrodenkappen umfasst. Durch eine vorgespannte Spiralfeder kann eine Drehung um eine Achse in eine Richtung erfolgen, und die Elektrodenkappen können einer Entnahmeöffnung zugeführt werden.

### Aufgabe

Ausgehend vom bekannten Stand der Technik besteht die zu lösende technische Aufgabe darin, ein Kappenmagazin und eine Kappenmagazineinheit anzugeben, mit denen in einer kompakten Weise Elektrodenkappen zur Verfügung gestellt werden können, wobei das Kappenmagazin und die Kappenmagazineinheit leicht mit neuen Elektrodenkappen bestückbar sind.

### Lösung

Diese Aufgabe wird erfindungsgemäß durch das Kappenmagazinnach Anspruch 1 und die Kappenmagazineinheit nach Anspruch 12 gelöst. Weitere Ausführungsformen und Weiterbildungen sind in den abhängigen Ansprüchen erfasst.

Das erfindungsgemäße Kappenmagazin zum Bereitstellen von Elektrodenkappen in einer Bereitstellungsposition in einem Ausbringbereich für eine Aufnahme durch einen Schweißarm, umfasst einen Innenraum, in dem Elektrodenkappen anordenbar sind, und eine Achse, um die die im Innenraum anordenbaren Elektrodenkappen in eine Drehrichtung um die Achse auf die Bereitstellungsposition zu bewegbar sind. Die in dem Innenraum anordenbaren Elektrodenkappen sind in der Drehrichtung um die Achse auf die Bereitstellungsposition vorgespannt.

Durch das vorgespannte Bereitstellen der Elektrodenkappen ist eine einfache Bewegung der einzelnen Elektrodenkappen aus dem Innenraum des Kappenmagazins in die Bereitstellungsposition im Ausbringbereich möglich.

Der Innenraum wird von einer Bodenplatte, einem Deckel und einem zumindest teilweise kreiszylindrischen Mantel des Kappenmagazins begrenzt. Der Mantel kann bis auf den Ausbringbereich der Elektrodenkappen kreiszylindrisch ausgebildet sein. Zum Ausbringbereich hin kann er geöffnet sein und beispielsweise auch eine gerade Form aufweisen.

Die Ausschiebevorrichtung kann bei einer Drehung in die erste Drehrichtung und wenn Elektrodenkappen von der ersten Kreislinie oder der zweiten Kreislinie nach und nach durch einen Schweißarm aus dem Kappenmagazin entfernt werden, dafür sorgen, dass keine Elektrodenkappe auf der ersten oder der zweiten Kreislinie oder sonst in dem Kappenmagazin verbleibt, wenn die vorwärtstreibende Kraft durch benachbarte Elektrodenkappen und/oder die Einbuchtungen des Rads nicht mehr ausreichend oder gar nicht mehr übertragen wird.

Die Achse umfasst an einem ersten Ende, das aus dem Innenraum durch den Deckel hinausragt, eine Adaptervorrichtung.

Ein entsprechend der Adaptervorrichtung komplementär ausgebildeter Steckschlüssel kann auf die Adaptervorrichtung aufbringbar ausgebildet sein. Der Steckschlüssel kann von dem Kappenmagazin umfasst werden oder separat zu dem Kappenmagazin zur Verfügung gestellt werden.

Der auf die Adaptervorrichtung aufgebrachte Steckschlüssel kann verwendet werden, um die Achse linear in eine erste Richtung zu bewegen, dadurch beispielsweise ein Zusammendrücken einer Druckfeder zu erwirken, die die Achse zumindest teilweise, um eine Drehung der Achse auszuführen und/oder um eine lineare Bewegung in eine zweite Richtung, die der ersten Richtung entgegengesetzt ist, zu führen.

Das Kappenmagazin umfasst weiter ein Gehäuse, das außerhalb des Innenraums auf dem Deckel angeordnet ist und durch das sich die Achse zumindest teilweise erstreckt. Das Gehäuse kann als Schutz eines Achslochs im Deckel vorgesehen sein.

Innerhalb des Gehäuses kann die Achse von einer Druckfeder umgeben sein, und die Achse kann einen Wulst umfassen, der die Achse innerhalb des Gehäuses umfänglich umgeben kann und auf dem eine erste Endwindung der Druckfeder ruhen kann, wobei eine zweite Endwindung der Druckfeder auf dem Deckel ruhen kann.

Die Druckfeder kann auch als Wellenfeder oder dergleichen ausgebildet sein.

Durch eine lineare Bewegung der Achse in eine Richtung, so dass der Wulst Richtung Deckel bewegt wird, beispielsweise ausgelöst durch Aufbringen eines entsprechend der Adaptervorrichtung komplementär ausgebildeten Steckschlüssels auf die Adaptervorrichtung und Bewegen in diese Richtung, kann der Wulst die Druckfeder zusammendrücken, so dass das zweite Ende der Achse aus der Einrastplatte ausgebracht werden kann. Nach dem Ausbringen des zweiten Endes aus der Einrastplatte ist es möglich, die Achse in eine Drehrichtung zu drehen, um beispielweise die Spiralfeder neu zu spannen. Zur Drehung der Achse kann der auf die Adaptervorrichtung aufgebrachte Steckschlüssel verwendet werden. Nach dem Spannen der Spiralfeder kann die Achse linear zurückbewegt werden, um das zweite Ende wieder in die Einrastplatte einzubringen. Dadurch wird die Druckfeder entspannt und der Wulst bewegt sich in einer Richtung von dem Deckel weg. Die Druckfeder sorgt dafür, dass die Achse in einer Position verbleiben kann, in der das zweite Ende von der Einrastplatte aufgenommen ist.

Ein zweites Ende der Achse, dessen Querschnitt größer als ein Querschnitt eines Achslochs der Achse in der Bodenplatte ist, ragt aus der Bodenplatte heraus, wobei auf der Bodenplatte eine Einrastplatte mit einer Aussparung vorgesehen ist, wobei das zweite Ende und die Aussparung jeweils derart ausgebildet sind, dass das zweite Ende formschlüssig von der Aussparung aufnehmbar ist.

Dadurch, dass der Querschnitt des zweiten Endes größer ist als der Querschnitt des Achslochs, kann das zweite Ende nicht durch das Achsloch in der Bodenplatte in den Innenraum des Kappenmagazins hineinrutschen kann.

Das zweite Ende kann als gleichseitiges Dreieck, als Quadrat, als gleichseitiges Fünfeck, als gleichseitiges Sechseck oder dergleichen ausgebildet sein und eine Aussparung der Einrastplatte kann entsprechend ebenfalls dreieckig, quadratisch, fünfeckig oder sechseckig ausgebildet sein, so dass das zweite Ende in der Aussparung aufgenommen werden kann. Zum Drehen der Achse sind dann Winkel eines Vielfachen von 120°, 90°, 72° bzw. 60° sinnvoll.

Das zweite Ende kann einen Stift umfassen, der das zweite Ende überragen und sich zudem in die Achse hineinerstrecken kann oder das zweite Ende kann eine Aushöhlung umfassen, die sich ausgehend von dem zweiten Ende in die Achse hineinerstrecken kann.

Der Stift und die Aushöhlung können derart ausgebildet, dass von einem ersten Kappenmagazin der Teil des Stifts, der das zweite Ende überragt, in die Aushöhlung eines zweiten Kappenmagazins einbringbar ist.

Das Kappenmagazin umfasst ein im Innenraum um die Achse angeordnetes Rad, das eine Vielzahl von Einbuchtungen entlang eines Umfangs des Rades umfasst, wobei die Einbuchtungen kreissegmentartig ausgebildet sein können und weiter derart ausgebildet sein können, dass erste bereitzustellende Elektrodenkappen darin teilumfänglich aufnehmbar und auf einem ersten Radius anordenbar sind. Ein Kreissegment einer Einbuchtung kann einen Mittelpunktswinkel in einem Bereich von 45° bis 90° aufweisen. Das Kappenmagazin weist beispielsweise keine Bohrungen auf, die jeweils die einzelnen Elektrodenkappen im Innenraum des Kappenmagazins vollumfänglich umgeben, und/oder weist beispielweise keine Kappenaufnahmetaschen auf, die jeweils die einzelnen Elektrodenkappen im Innenraum des Kappenmagazins vollumfänglich umgeben.

Ein radialer Abstand zwischen dem Mantel und einer Mitte einer der Einbuchtungen kann derart ausgebildet sein, dass zweite bereitzustellende Elektrodenkappen auf einem zweiten Radius, der größer als der erste Radius ist, derart anordenbar sind, dass die zweiten bereitzustellenden Elektrodenkappen zumindest teilweise den Mantel und die ersten bereitzustellenden Elektrodenkappen berühren.

So ist es möglich, eine größere Anzahl von Elektrodenkappen in dem Innenraum des Kappenmagazins anzuordnen und die Elektrodenkappen somit einem oder mehreren Schweißarmen jeweils einzeln zu einer Aufnahme in der Bereitstellungsposition im Ausbringbereich bereitzustellen. Die ersten bereitzustellenden Elektrodenkappen können durch die Einbuchtungen zu dem Ausbringbereich bewegt und die zweiten bereitzustellenden Elektrodenkappen können durch die ersten bereitzustellenden Elektrodenkappen und die Begrenzung durch den Mantel zu dem Ausbringbereich bewegt werden. Daher ist es nicht erforderlich, dass das Kappenmagazin beispielsweise Bohrungen aufweist, die jeweils die einzelnen Elektrodenkappen der im Innenraum angeordneten Elektrodenkappen vollumfänglich umgeben, und/oder beispielweise Kappenaufnahmetaschen aufweist, die jeweils die einzelnen Elektrodenkappen der im Innenraum angeordneten Elektrodenkappen vollumfänglich umgeben.

Um die Achse ist eine vorspannbare Spiralfeder vorgesehen, die ausgebildet ist, das Rad in die Drehrichtung um die Achse zu drehen, wodurch die in dem Innenraum anordenbaren Elektrodenkappen in der Drehrichtung um die Achse auf die Bereitstellungsposition vorgespannt sind.

Die um die Achse angeordnete Spiralfeder kann an der Achse an der ersten Stelle befestigt sein; dafür kann eine Aussparung in der Achse vorgesehen sein, in die die Spiralfeder beispielsweise eingesteckt und befestigt werden kann. Die Spiralfeder kann an dem Rad an einer zweiten Stelle befestigt sein.

Das Kappenmagazin kann weiter eine Ausschiebevorrichtung umfassen, die sich zumindest teilweise zwischen dem Rad und dem Mantel erstreckt und die ausgebildet ist, die ersten und zweiten bereitzustellenden Elektrodenkappen bei einer Drehung in die Drehrichtung in die Drehrichtung zu schieben.

Die Ausschiebevorrichtung kann einen Ausschieber mit einer Außenform in Form einer Elektrodenkappe und eine Verbindungsvorrichtung umfassen, wobei die Verbindungsvorrichtung den Ausschieber mit dem Rad verbinden kann.

Der Ausschieber kann auf einer zweiten Kreislinie vorgesehen sein und mit der Verbindungsvorrichtung mit der von der Achse abgewandten Seitenfläche des Rads verbunden sein. In die erste Drehrichtung gesehen, können der Ausschieber und die Verbindungsvorrichtung hinter im Innenraum vorhandenen Elektrodenkappen angeordnet sein. So können bei einer Drehung in die erste Drehrichtung und wenn die Elektrodenkappen nach und nach von der ersten Kreislinie oder der zweiten Kreislinie, und von der Führungsvorrichtung geführt, in den Ausbringbereich überführt und dann durch einen Schweißarm aus dem Kappenmagazin entfernt werden, der Ausschieber und die Verbindungsvorrichtung dafür sorgen, dass keine Elektrodenkappe auf der ersten oder der zweiten Kreislinie oder im Bereich der Führungsvorrichtung verbleibt, wenn die vorwärtstreibende Kraft durch benachbarte Elektrodenkappen und /oder die Einbuchtungen des Rads nicht mehr ausreichend oder gar nicht mehr übertragen wird.

Der Deckel kann im Ausbringbereich eine Aussparung umfassen. Dadurch kann ein Schweißarm eine Elektrodenkappe in der Bereitstellungsposition im Ausbringbereich aufnehmen.

Durch das Vorsehen der Aussparung im Deckel des Kappenmagazins kann ein Schweißarm ohne Elektrodenkappe parallel zu der Achse in eine im Ausbringbereich angeordnete Elektrodenkappe eingebracht werden.

In dem Ausbringbereich können ein Zurückhalter und ein Niederhalter für jeweils eine Elektrodenkappe vorgesehen sein.

Die Elektrodenkappe kann von dem Zurückhalter, der beispielsweise mittels einer Federkraft einer Rückstellfeder wirken kann, in dem Ausbringbereich des Kappenmagazins zurückgehalten werden. Mit dem Niederhalter kann eine Elektrodenkappe im Ausbringbereich, je nach Ausrichtung des Kappenmagazins, an einer unerwünschten Bewegung nach oben oder unten gehindert werden. Dadurch verbleibt die Elektrodenkappe in dem Ausbringbereich bis sie durch einen Schweißarm aufgenommen und aus dem Ausbringbereich entfernt wird. Der Niederhalter kann derart angeordnet sein, dass er einen Aufnahmebereich des Schweißarms nicht überdeckt.

Das Kappenmagazin kann weiter eine Führungsvorrichtung umfassen, die sich von dem Innenraum bis in den Ausbringbereich erstrecken kann.

Mittels der Führungsvorrichtung können die Elektrodenkappen aus dem Innenraum in den Ausbringbereich geführt werden.

Die Spiralfeder kann an der Achse und an dem Rad befestigt sein.

Durch die feste Position der Achse kann die vorgespannte Spiralfeder ihre Federkraft an das Radübertragen und dies dadurch drehen.

Eine Kappenmagazineinheit umfasst ein erstes und ein zweites Kappenmagazin wie oben und/oder weiter unten beschrieben, wobei eine Achse des ersten Kappenmagazins und eine Achse des zweiten Kappenmagazins koaxial ausgerichtet sind, wobei eine äußere Oberfläche einer ersten Bodenplatte des ersten Kappenmagazins zu einer äußeren Oberfläche einer zweiten Bodenplatte des zweiten Kappenmagazins weist und wobei zwischen der äußeren Oberfläche der ersten Bodenplatte und der äußeren Oberfläche der zweiten Bodenplatte ein Abstand ausgebildet ist.

Der Abstand kann derart bemessen sein, dass jeweils eine lineare Bewegung der Achsen zum Spannen der jeweiligen Spiralfeder möglich ist.

Zwischen der äußeren Oberfläche der ersten Bodenplatte und der äußeren Oberfläche der zweiten Bodenplatte kann eine Distanzplatte vorgesehen sein.

Die Distanzplatte kann als Kreisring ausgebildet sein. Die Distanzplatte kann einen Bereich zwischen dem ersten und dem zweiten Kappenmagazin, in dem sich die Einrastplatten und die zweiten Enden der Achsen befinden, vor Verunreinigungen schützen.

Die Achse des ersten Kappenmagazins kann eine Aushöhlung und die Achse des zweiten Kappenmagazins kann einen Stift aufweisen.

Bei einem Spannen der Spiralfeder des ersten Kappenmagazins kann die Aushöhlung über den Stift der Achse des zweiten Kappenmagazins gestülpt werden, so dass eine Ausrichtung entlang einer Längsachse der Achse des ersten Kappenmagazins bei einer Drehung der Achse genauer beibehalten werden kann.

Bei einem Spannen der Spiralfeder des zweiten Kappenmagazins kann der Stift in die Aushöhlung der Achse des ersten Kappenmagazins eingebracht werden, so dass eine Ausrichtung entlang einer Längsachse der Achse des zweiten Kappenmagazins bei einer Drehung der Achse genauer beibehalten werden kann.

Zwischen einem zweiten Ende der Achse des ersten Kappenmagazins und einem zweiten Ende der Achse des zweiten Kappenmagazins kann eine Druckfeder angeordnet sein, die den Stift teilweise umgeben kann. Durch das Vorsehen dieser einen Druckfeder kann auf die Gehäuse auf den Deckeln der Kappenmagazine und die darin befindlichen Druckfedern verzichtet werden.

### Kurze Figurenbeschreibung

Die beigefügten Figuren stellen beispielhaft zum besseren Verständnis und zur Veranschaulichung Aspekte und Ausführungsformen der Erfindung dar. Es zeigt:
Figur 1 eine schematische Schrägansicht von oben auf eine erste Ausführungsform einer Kappenmagazineinheit mit zwei Kappenmagazinen einer ersten Ausführungsform,
Figur 2A eine schematische Draufsicht auf die Anordnung der Figur 1, wobei der Deckel des oberen Kappenmagazins entfernt wurde und dieses komplett mit Elektrodenkappen bestückt ist,
Figur 2B die Anordnung der Figur 2A, wobei bereits ein Teil der Elektrodenkappen aus dem oberen Kappenmagazin entfernt wurde,
Figur 3 eine schematische Schnittansicht der Kappenmagazineinheit in einer Ebene parallel zu den Achsen,
Figur 4 eine Draufsicht auf die äußere Oberfläche des Bodens des Kappenmagazins,
Figur 5 eine schematische Schrägansicht von oben auf eine zweite Ausführungsform einer Kappenmagazineinheit mit zwei Kappenmagazinen einer zweiten Ausführungsform,
Figur 6 eine schematische Draufsicht auf eines der Kappenmagazine der zweiten Ausführungsform, bei dem der Deckel entfernt wurde und in dem sich nur noch eine Elektrodenkappe befindet,
Figur 7 eine schematische Schnittansicht der Kappenmagazineinheit in einer Ebene parallel zu den Achsen,
Figur 8 eine schematische Schrägansicht von oben auf eine dritte Ausführungsform einer Kappenmagazineinheit mit zwei Kappenmagazinen einer dritten Ausführungsform und
Figur 9 eine schematische Schnittansicht der Kappenmagazineinheit in einer Ebene parallel zu den Achsen.

### Ausführliche Beschreibung

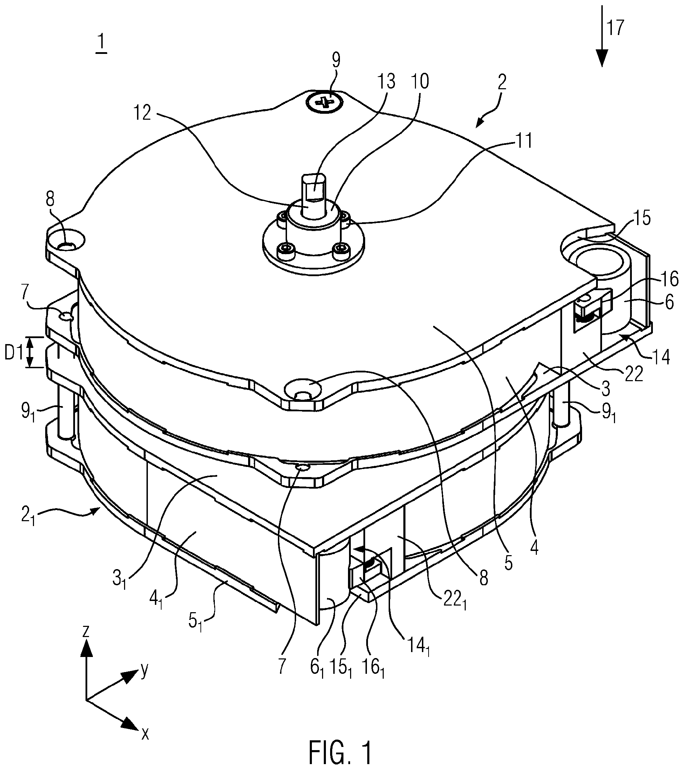

Die Figur 1 zeigt eine schematische Schrägansicht von oben auf eine erste Ausführungsform einer Kappenmagazineinheit 1 mit einem oberen Kappenmagazin 2 und einem unteren Kappenmagazin 2₁. Da das obere 2 und das untere Kappenmagazin 2₁ baugleich ausgebildet sein können, wird im Folgenden Bezug auf das obere Kappenmagazin 2 genommen.

In der Darstellung sind von dem oberen Kappenmagazin 2 ein Teil einer Bodenplatte 3, ein Teil des Mantels 4 und der Deckel 5 zu sehen. Der Mantel 4 ist bis auf einen Ausbringbereich 14 der Elektrodenkappen 6 kreiszylindrisch ausgebildet und umhüllt einen Innenbereich des Kappenmagazins 2. Die Bodenplatte 3 und der Deckel 5 weisen außerhalb des Innenbereichs jeweils durchgängige Bohrungen 7, 8 auf, in die Befestigungsmittel 9, wie Schrauben, eingebracht werden können, um das obere Kappenmagazin 2 mit dem unteren Kappenmagazin 2 und/oder an/mit einer nicht dargestellten Haltestruktur oder dergleichen befestigen zu können.

Auf dem Deckel 5 außerhalb des Innenraums befindet sich ein Gehäuse 10, das mittels Schrauben 11 mit dem Deckel 5 verbunden. Eine Achse 12, die einer Mittelachse des Kreiszylinders, mit dem der Mantel 4 angenähert werden kann, entspricht, ragt mit einem ersten Ende aus dem Gehäuse 10 hinaus und weist an diesem ersten Ende eine Adaptervorrichtung 13 für einen entsprechend komplementär ausgebildeten Steckschlüssel auf, der auf die Adaptervorrichtung 13 aufbringbar ausgebildet ist.

In der Figur 1 ist in einer Bereitstellungsposition im Ausbringbereich 14 der Elektrodenkappen 6 eine Elektrodenkappe 6 angeordnet. Im Ausbringbereich 14 weist der Deckel 5 des Kappenmagazins 2 eine Aussparung 15 auf, so dass ein Schweißarm ohne Elektrodenkappe von oben, d.h. parallel zu der Achse 12, in die in der Bereitstellungsposition im Ausbringbereich 14 angeordnete Elektrodenkappe 6 einbringbar ist. Die Elektrodenkappe 6 wird von einem Zurückhalter 16, der mittels einer Federkraft einer Rückstellfeder wirkt, in dem Kappenmagazin 2 zurückgehalten. Mit einem nichtsichtbaren Niederhalter wird die Elektrodenkappe 6 in der Bereitstellungsposition im Ausbringbereich 14 an einer unerwünschten Bewegung nach oben gehindert. Mittels einer Führungsvorrichtung 22, die sich von einem Innenraum des Kappenmagazins 2 bis in den Ausbringbereich 14 erstreckt, werden die Elektrodenkappen 6 nacheinander in die Bereitstellungsposition im Ausbringbereich 14 geführt. Die Federkraft des Zurückhalters 16 ist derart bemessen, dass ein Schweißarm, nachdem er die Elektrodenkappe 6 aufgenommen hat, die Elektrodenkappe 6 bei einer Bewegung senkrecht zu der Achse 12 aus dem Kappenmagazin 2 durch Überwinden der Federkraft entfernen kann.

Das obere Kappenmagazin 2 weist mit einer äußeren Oberfläche seines Deckels 5 entgegen einer Wirkrichtung 17 der Schwerkraft und mit einer äußeren Oberfläche seiner Bodenplatte 3 in die Wirkrichtung 17 der Schwerkraft. Der Deckel 5 und der Boden sind jeweils senkrecht zur Wirkrichtung 17 der Schwerkraft ausgerichtet.

Das untere Kappenmagazin 2₁ ist hinsichtlich des oberen Kappenmagazins 2 derart ausgerichtet, dass eine äußere Oberfläche der Bodenplatte 5₁ des unteren Kappenmagazins 2₁ entgegen der Wirkrichtung 17 der Schwerkraft weist und seine Bodenplatte 5₁ parallel zu einer Bodenplatte 5 des oberen Kappenmagazins 2 verläuft.

Die beiden Ausbringbereiche 14, 14, sind auf einer Seite der Kappenmagazineinheit 1 angeordnet. Eine virtuelle Verlängerung einer Achse 12 des oberen Kappenmagazins 2, die weiter unten genauer beschrieben wird, und eine virtuelle Verlängerung einer in der Figur 1 nicht sichtbaren Achse des unteren Kappenmagazins 2₁, sind ineinander übergehend angeordnet; die beiden Achsen sind koaxial ausgerichtet.

Zwischen der äußeren Oberfläche der Bodenplatte 5₁ des unteren Kappenmagazins 2₁ und der äußeren Oberfläche der Bodenplatte 5 des unteren Kappenmagazins 2 ist ein Abstand D1 ausgebildet.

Die beiden Kappenmagazine 2, 2, sind somit derart ausgerichtet, dass aus beiden Kappenmagazinen 2, 2, eine durch einen Schweißarm aufgenommene Elektrodenkappe 6, 6₁ bei einer Bewegung parallel zur x-Achse aus dem jeweiligen Kappenmagazin 2, 2, entfernt werden kann.

Da das untere Kappenmagazin 2₁ mit dem Boden 3₁ nach oben weist, verhindert der nicht sichtbare Niederhalter ein Herausfallen, d.h. eine unerwünschte Bewegung nach unten, einer Elektrodenkappe 6₁ in der Bereitstellungsposition aus dem Ausbringbereich 14₁.

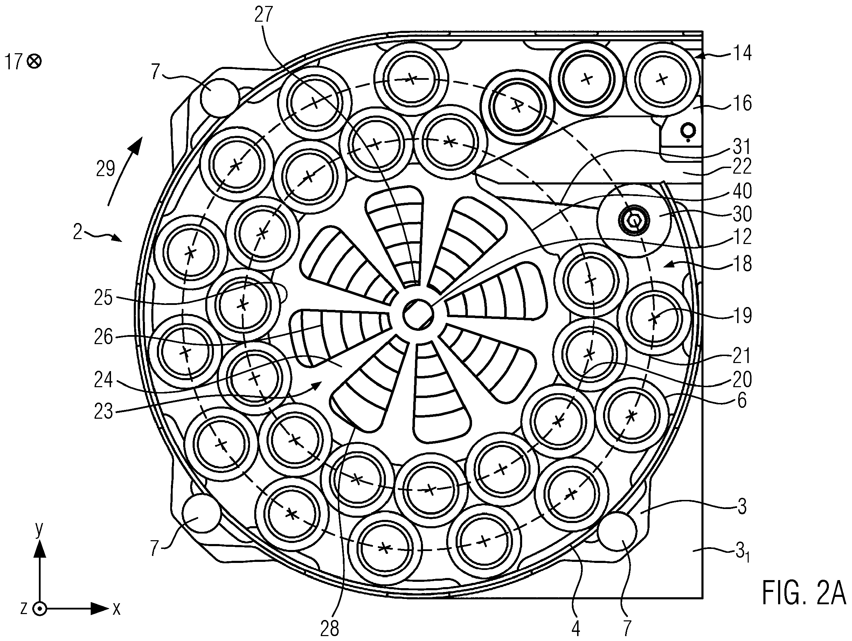

Die Figur 2A zeigt eine Draufsicht auf die Anordnung der Figur 1, wobei der Deckel des oberen Kappenmagazins 2 entfernt wurde und ein Innenraum 18 des Kappenmagazins 2 zu sehen ist, das mit 28 Elektrodenkappen 6 zweireihig bestückt ist.

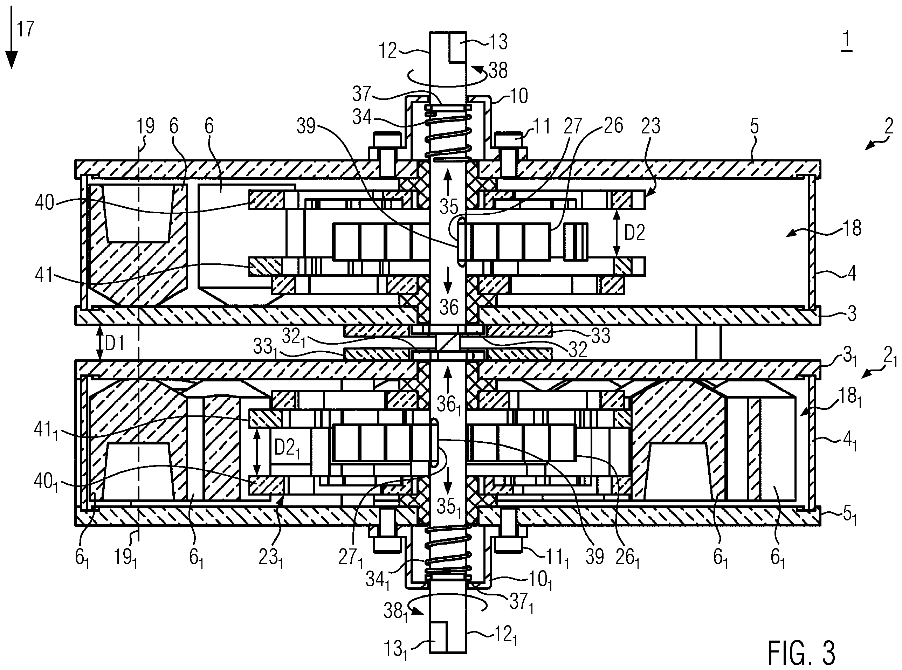

Die Achse 12 wird in dem Innenraum 18 von einem Rad 23 umgeben, das einen hier sichtbaren, oberen Teil 40 und einen hier nicht sichtbaren, unteren Teil (siehe beispielsweise Figur 3) mit jeweils acht Speichen 24 umfasst. Die jeweils von der Achse 12 abgewandten Seitenflächen des oberen Teils 40 und des unteren Teils des Rads 23 umfassen entlang eines Teilumfangs jeweils dreizehn Einbuchtungen 25 in Form von Kreissegmenten. Die Einbuchtungen 25 sind derart ausgebildet, dass Elektrodenkappen 6 teilumfänglich darin aufgenommen werden können, und wenn die Elektrodenkappen 6 darin teilumfänglich aufgenommen sind, können sie auf einer ersten Kreislinie 20 die eine (für die beiden Elektrodenkappen 6 an den beiden Enden des Teilumfangs) oder die beiden (für die anderen elf Elektrodenkappen 6) benachbarten Elektrodenkappen 6 an einer Stelle ihres jeweiligen Umfangs berühren. Die erste Kreislinie 20 verläuft durch die Mittelachsen 6 der Elektrodenkappen 6, die in den Einbuchtungen 25 angeordnet sind und weist einen ersten Radius R1 auf.

Zwischen dem Mantel 3 des Kappenmagazins und den Elektrodenkappen 6 auf der ersten Kreislinie 20 sind 13 weitere Elektrodenkappen 6 auf einer zweiten Kreislinie 21 angeordnet. Die zweite Kreislinie 21 verläuft durch die Mittelachsen 6 dieser dreizehn Elektrodenkappen 6 und weist einen zweiten Radius R2 auf. Die Elektrodenkappen 6 auf der zweiten Kreislinie 21 berühren jeweils zwei der Elektrodenkappen 6, die auf der ersten Kreislinie angeordnet sind, an einer Stelle ihres jeweiligen Umfangs und den Mantel 3 im Innenraum 18 an jeweils einer Stelle. Dadurch können bei einer Drehung des Rads 23 um die Achse 12 in eine erste Drehrichtung 29 (hier im Uhrzeigersinn) die Elektrodenkappen 6 auf der ersten Kreislinie 20 mittels der Einbuchtungen 25 vorwärtsbewegt werden und die Elektrodenkappen 6 auf der zweiten Kreislinie 21 werden dadurch mit vorwärtsbewegt.

Die Drehung des Rads 23 in die erste Drehrichtung 29 wird durch eine vorgespannte Spiralfeder 26 erreicht, die die Achse 12 umgibt, die an der Achse 12 an einer ersten Stelle 27 und an dem Rad 23 an einer zweiten Stelle befestigt ist. Wird eine Elektrodenkappe 6 in der Bereitstellungsposition aus dem Ausbringbereich 14 entfernt, so wird das Rad 23 durch die Federkraft in die erste Drehrichtung 29 bewegt und eine neue Elektrodenkappe 6 kann in die Bereitstellungsposition im Ausbringbereich 14 eingebracht werden. Dabei werden die Elektrodenkappen 6 von der ersten Kreislinie 20 oder der zweiten Kreislinie 21 mit der Führungsvorrichtung 22 in den Ausbringbereich 14 geführt.

Auf der zweiten Kreislinie 21 ist zudem ein Ausschieber 30 mit einer Außenform in Form einer Elektrodenkappe vorgesehen, der mit einer Verbindungsvorrichtung 31 mit der von der Achse 12 abgewandten Seitenfläche des Rads 23 verbunden ist. In die erste Drehrichtung 29 gesehen, sind der Ausschieber 30 und die Verbindungsvorrichtung 31 hinter den im Innenraum 18 vorhandenen Elektrodenkappen 6 angeordnet. So können bei einer Drehung in die erste Drehrichtung 29 und wenn die Elektrodenkappen 6 nach und nach von der ersten Kreislinie 20 oder der zweiten Kreislinie 21, und von der Führungsvorrichtung 22 geführt, in den Ausbringbereich 14 überführt und dann durch einen Schweißarm aus dem Kappenmagazin entfernt werden, der Ausschieber 30 und die Verbindungsvorrichtung 31 dafür sorgen, dass keine Elektrodenkappe auf der ersten oder der zweiten Kreislinie 20, 21 oder im Bereich der Führungsvorrichtung 22 verbleibt, wenn die vorwärtstreibende Kraft durch benachbarte Elektrodenkappen 6 und /oder die Einbuchtungen 25 des Rads 23 nicht mehr ausreichend oder gar nicht mehr übertragen wird.

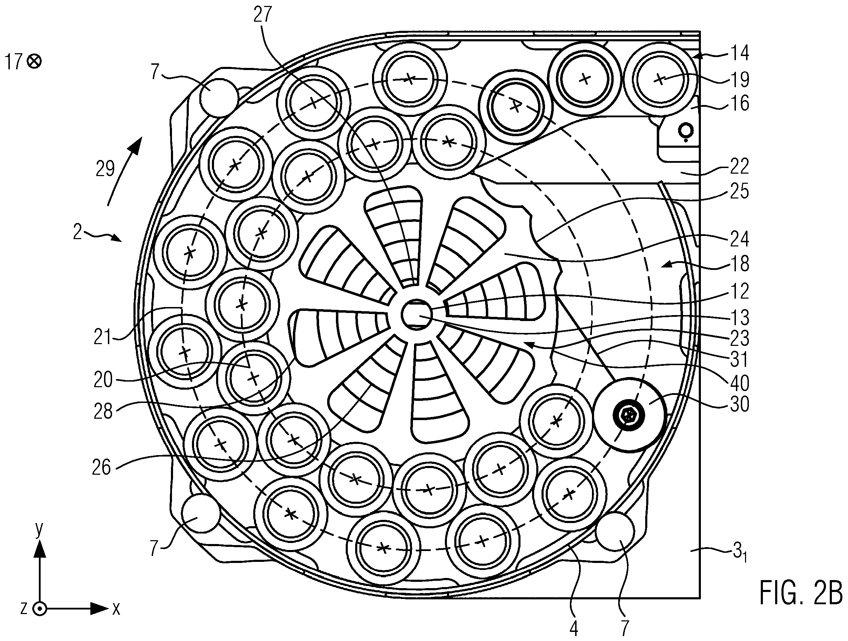

Die Figur 2B zeigt die Anordnung der Figur 2A, wobei bereits ein Teil der Elektrodenkappen 6 aus dem oberen Kappenmagazin 2 entfernt wurde. Es sind 24 Elektrodenkappen 6 im oberen Kappenmagazin 2 verblieben. Der Ausschieber 30 zusammen mit den Einbuchtungen 25 und der Spiralfeder 26 sorgt für das Vorwärtsschieben der Elektrodenkappen 6 in die erste Richtung 29.

Die Figur 3 zeigt eine schematische Schnittansicht der Kappenmagazineinheit 1 in einer Ebene parallel zu den Achsen 12, 12₁. Vom oberen/unteren Kappenmagazin 2, 2, ist somit der durch die Bodenplatte 3, 3₁, den Mantel 4, 4, und den Deckel 5, 5₁ begrenzte Innenraum 18, 18, zu erkennen, in dem mehrere Elektrodenkappen 6, 6₁ angeordnet sind.

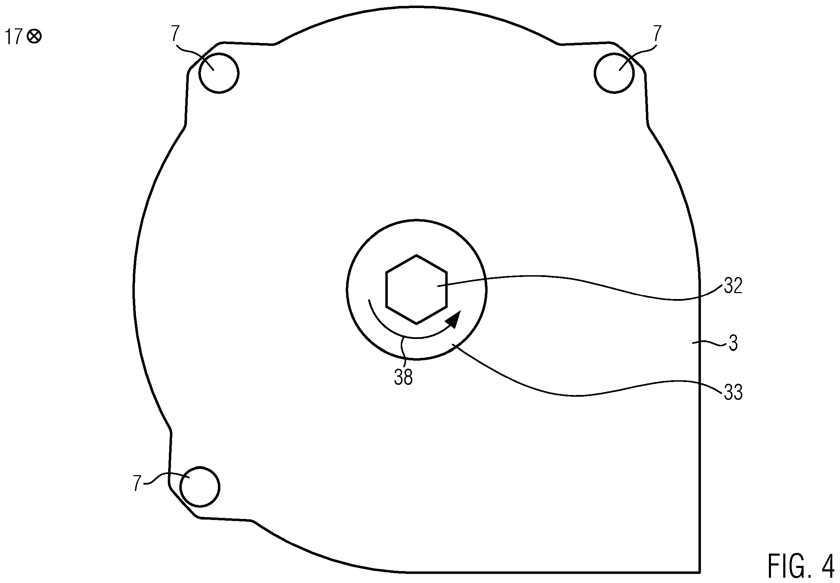

Die Achse 12, 12, ragt mit dem ersten Ende, das die Adaptervorrichtung 13, 13, umfasst, aus dem Gehäuse 10, 10, heraus. Das zweite Ende 32, 32, der Achse 12, 12, ragt aus der Bodenplatte 3, 3, heraus und ist derart dimensioniert, dass es nicht durch das Achsloch in der Bodenplatte 3, 31 in den Innenraum 18, 18, des Kappenmagazins 2, 2, hineinrutschen kann. Auf der äußeren Oberfläche der Bodenplatte 3, 3₁ ist eine Einrastplatte 33, 33₁ mit einer Aussparung angeordnet, in die das zweite Ende 32, 32, einbringbar ist (siehe auch Figur 4).

In dem Gehäuse 10, 10₁, das mit Schrauben 11, 11, auf der äußeren Oberfläche des Deckels 5, 51 befestigt ist, ist eine Druckfeder 34, 34, angeordnet, die die Achse 12, 12, umgibt. Die Druckfeder 34, 34, kann auch als Wellenfeder oder dergleichen ausgebildet sein. Die eine Endwindung der Druckfeder 34, 34, ruht auf der äußeren Oberfläche des Deckels 5, 5, und die andere Endwindung der Druckfeder 34, 34, ruht auf einem Wulst 12, 12₁, der die Achse 12, 12, innerhalb des Gehäuses 10, 10, umfänglich umgibt. Durch eine Bewegung der Achse 12, 12, in die zweite Richtung 36, 36₁, beispielsweise ausgelöst durch Aufbringen eines entsprechend der Adaptervorrichtung 13, 13₁ komplementär ausgebildeten Steckschlüssels auf die Adaptervorrichtung 13, 13₁ und Bewegen in die zweite Richtung 36, 36₁, kann der Wulst 37, 37, die Druckfeder 34, 34, zusammendrücken, so dass das zweite Ende 32, 32, aus der Einrastplatte 33, 33, ausgebracht werden kann. Dadurch ist es möglich, die Achse 12, 12, in eine zweite Drehrichtung 38, 38₁ zu drehen, um beispielweise die Spiralfeder 26, 26₁ neu zu spannen. Nach dem Spannen der Spiralfeder 26, 26, kann die Achse 12, 12, in die erste Richtung 35, 35, bewegt werden, um das zweite Ende 32, 32, wieder in die Einrastplatte 33, 33, einbringen zu können. Das zweite Ende 32, 32, kann hierbei als gleichseitiges Sechseck ausgebildet sein und eine Aussparung der Einrastplatte 33, 33, entsprechend ebenfalls sechseckig, so dass das zweite Ende 32, 32, in der Aussparung aufgenommen werden kann. Zum Drehen der Achse 12, 12, sind dann Winkel eines Vielfachem von 60° sinnvoll. Das zweite Ende kann aber auch als gleichseitiges Dreieck, als Quadrat, als gleichseitiges Fünfeck oder dergleichen ausgebildet sein, wobei die Aussparung der Einrastplatte dann entsprechend ausgebildet ist. Zum Drehen der Achse sind dann Winkel eines Vielfachem von 120°, 90° bzw. 72° sinnvoll.

Die um die Achse 12, 12, angeordnete Spiralfeder 26, 26, ist an der Achse 12, 12, an der ersten Stelle 27, 27, befestigt; dafür ist eine Aussparung 39, 39, in der Achse 12, 12, vorgesehen, in die die Spiralfeder 26, 26, beispielsweise eingesteckt und befestigt werden kann. Die Spiralfeder 26, 26, ist in einem Bereich zwischen dem oberen Teil 40, 40, und dem unteren Teil 41, 41, des Rads 23, 23, angeordnet, wobei ein Abstand D2 zwischen dem oberen 40, 40, und dem unteren Teil 41, 41, derart bemessen ist, dass die Spiralfeder 26, 26, dazwischen passt und auch eine Bewegung in die zweite Richtung 36, 36₁, die durch eine entsprechende Bewegung der Achse 12, 12, in die zweite Richtung 36, 36, bedingt wird, möglich ist.

In der Figur 4 ist in einer Draufsicht das zweite Ende 32 der Achse 12 dargestellt, das aus der Bodenplatte 3 herausragt. Das zweite Ende 32 ist hier exemplarisch sechseckig ausgebildet, wobei die Dimension derart bemessen ist, dass das zweite Ende 32 nicht durch das Achsloch in der Bodenplatte 3 in den Innenraum 18 des Kappenmagazins 2 hineinrutschen kann. Auf der äußeren Oberfläche der Bodenplatte 3 ist eine Einrastplatte 33 mit einer sechseckigen Aussparung angeordnet, in die das sechseckig ausgebildete zweite Ende 32 der Achse 12 formschlüssig einbringbar und haltbar ist. Wie bereits hinsichtlich der Figur 3 beschrieben, kann durch eine Bewegung der Achse 12, 12, in die zweite Richtung 36, 36, der Wulst 37, 37₁ der Achse 12, 12₁ die Druckfeder 34, 34, zusammendrücken, so dass das zweite Ende 32, 32, aus der Einrastplatte 33, 33, ausgebracht werden kann. Dadurch ist es möglich, die Achse 12, 12, in eine zweite Drehrichtung 38, 38, zu drehen, um beispielweise die Spiralfeder 26, 26, neu zu spannen. Nach den Spannen der Spiralfeder 26, 26, kann die Achse 12, 12, in die erste Richtung 35, 35, zu bewegen, um das zweite Ende 32, 32₁ wieder in die Einrastplatte 33, 33₁ einbringen zu können. Der Drehwinkel der Achse 12, 12, ist dabei möglichst ein Vielfaches von 60°.

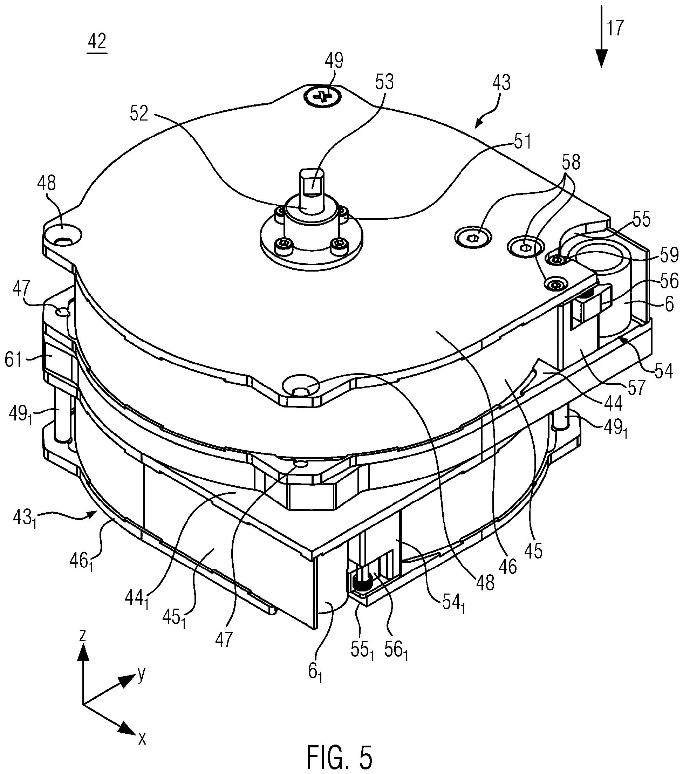

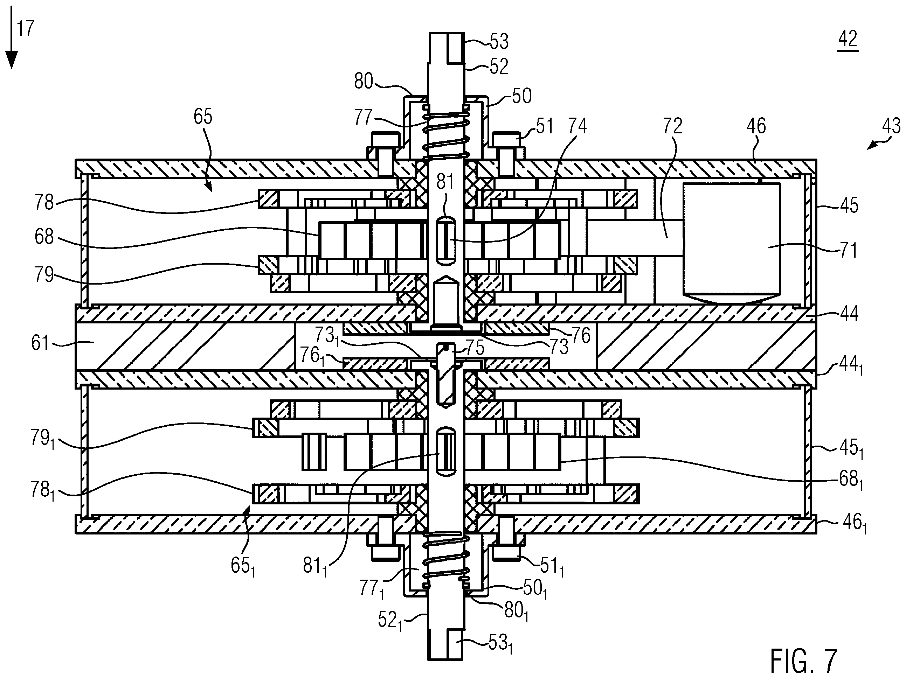

Die Figur 5 zeigt eine schematische Schrägansicht von oben auf eine zweite Ausführungsform einer Kappenmagazineinheit 42 mit einem oberen Kappenmagazin 43 und einem unteren Kappenmagazin 43₁. Da das obere 43 und das untere Kappenmagazin 43₁, bis auf die Achsen 52, 521 baugleich ausgebildet sein können, wird im Folgenden Bezug auf das obere Kappenmagazin 43 genommen. Die Unterschiede der Achsen 52, 521 werden in der Figur 7 näher erläutert.

In der Darstellung sind von dem oberen Kappenmagazin 43 ein Teil einer Bodenplatte 44, ein Teil des Mantels 45 und der Deckel 46 zu sehen. Der Mantel 45 ist bis auf einen Ausbringbereich 54 der Elektrodenkappen 6 kreiszylindrisch ausgebildet und umhüllt einen Innenbereich des Kappenmagazins 43. Die Bodenplatte 44 und der Deckel 46 weisen außerhalb des Innenbereichs jeweils durchgängige Bohrungen 47, 48 auf, in die Befestigungsmittel 49, wie Schrauben, eingebracht werden können, um das obere Kappenmagazin 43 mit dem unteren Kappenmagazin 431 und/oder an/mit einer nicht dargestellten Haltestruktur oder dergleichen befestigen zu können.

Auf dem Deckel 46 außerhalb des Innenraums befindet sich ein Gehäuse 50, das mittels Schrauben 51 mit dem Deckel 46 verbunden. Eine Achse 52, die einer Mittelachse des Kreiszylinders, mit dem der Mantel 45 angenähert werden kann, entspricht, ragt mit einem ersten Ende aus dem Gehäuse 50 hinaus und weist an diesem ersten Ende eine Adaptervorrichtung 53 für einen entsprechend komplementär ausgebildeten Steckschlüssel auf, der auf die Adaptervorrichtung 53 aufbringbar ausgebildet ist.

In der Figur 5 ist in einer Bereitstellungsposition im Ausbringbereich 54 der Elektrodenkappen 6 eine Elektrodenkappe 6 angeordnet. Im Ausbringbereich 54 weist der Deckel 46 des Kappenmagazins 43 eine Aussparung 55 auf, so dass ein Schweißarm ohne Elektrodenkappe von oben, d.h. parallel zu der Achse 52, in die in der Bereitstellungsposition im Ausbringbereich 54 angeordnete Elektrodenkappe 6 einbringbar ist. Die Elektrodenkappe 6 wird von einem Zurückhalter 56, der mittels einer Federkraft einer Rückstellfeder wirkt, in dem Kappenmagazin 43 zurückgehalten. Mit einem nichtsichtbaren Niederhalter, dessen Befestigungsschraube 59 erkennbar ist, wird die Elektrodenkappe 6 in der Bereitstellungsposition im Ausbringbereich 54 an einer unerwünschten Bewegung nach oben gehindert. Mittels einer Führungsvorrichtung 57, die sich von einem Innenraum des Kappenmagazins 43 bis in den Ausbringbereich 54 erstreckt und die mit Schrauben 58 an dem Deckel 46 befestigt ist, werden die Elektrodenkappen 6 in den Ausbringbereich 54 geführt. Die Federkraft des Zurückhalters 56 ist derart bemessen, dass ein Schweißarm, nachdem er die Elektrodenkappe 6 aufgenommen hat, die Elektrodenkappe 6 bei einer Bewegung senkrecht zu der Achse 52 in x-Richtung aus dem Kappenmagazin 43 durch Überwinden der Federkraft entfernen kann.

Das obere Kappenmagazin 43 weist mit einer äußeren Oberfläche seines Deckels 46 entgegen einer Wirkrichtung 17 der Schwerkraft und mit einer äußeren Oberfläche seiner Bodenplatte 44 in die Wirkrichtung 17 der Schwerkraft. Der Deckel 46 und die Bodenplatte 44 sind jeweils senkrecht zur Wirkrichtung 17 der Schwerkraft ausgerichtet.

Das untere Kappenmagazin 43₁ ist hinsichtlich des oberen Kappenmagazins 43 derart ausgerichtet, dass eine äußere Oberfläche der Bodenplatte 44₁ des unteren Kappenmagazins 43₁ entgegen der Wirkrichtung 17 der Schwerkraft weist und seine Bodenplatte 46₁ parallel zu der Bodenplatte 44 des oberen Kappenmagazins 43 verläuft.

Die beiden Ausbringbereiche 54, 54, sind auf einer Seite der Kappenmagazineinheit 42 angeordnet. Eine virtuelle Verlängerung einer Achse 52 des oberen Kappenmagazins 43, die weiter unten genauer beschrieben wird, und eine virtuelle Verlängerung einer in der Figur 5 nicht sichtbaren Achse des unteren Kappenmagazins 43₁, sind ineinander übergehend angeordnet; die beiden Achsen sind koaxial ausgerichtet.

Zwischen der äußeren Oberfläche der Bodenplatte 46₁ des unteren Kappenmagazins 43₁ und der äußeren Oberfläche der Bodenplatte 46 des unteren Kappenmagazins 43 ist eine Distanzplatte 61 angeordnet.

Die beiden Kappenmagazine 43, 43, sind somit derart ausgerichtet, dass aus beiden Kappenmagazinen 43, 43, eine durch einen Schweißarm aufgenommene Elektrodenkappe 6, 6₁ bei einer Bewegung parallel zur x-Achse aus dem jeweiligen Kappenmagazin 43, 43, entfernt werden kann.

Da das untere Kappenmagazin 43₁ mit der Bodenplatte 44₁ nach oben weist, verhindert der nicht sichtbare Niederhalter ein Herausfallen, d.h. eine unerwünschte Bewegung nach unten, einer Elektrodenkappe 6₁ in der Bereitstellungsposition aus dem Ausbringbereich 54.

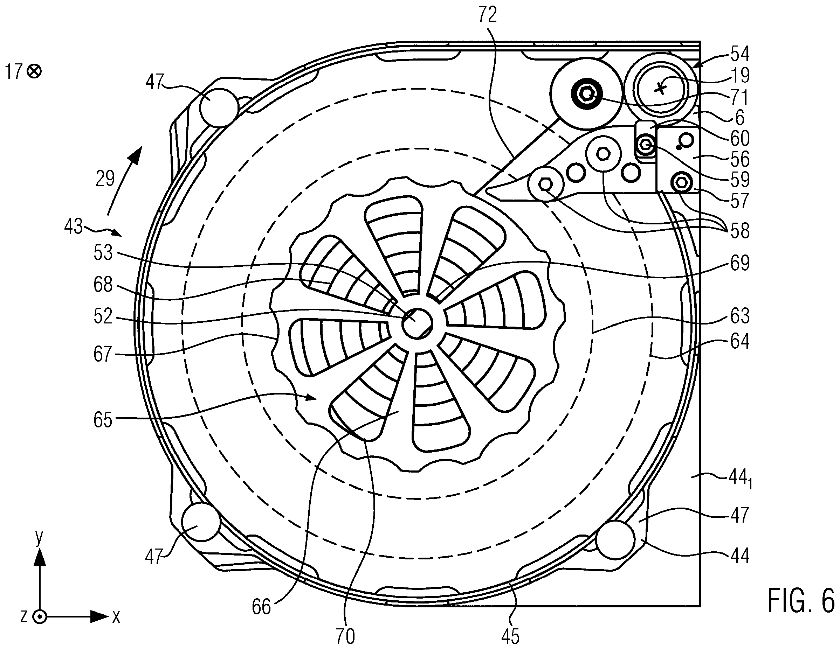

Die Figur 6 zeigt eine schematische Draufsicht auf die Anordnung der Figur 5, wobei der Deckel des oberen Kappenmagazins 43 entfernt wurde und ein Innenraum 62 des Kappenmagazins 43 zu sehen ist, das, wie das Kappenmagazin 2 der ersten Ausführungsform zweireihig mit Elektrodenkappen bestückbar ist.

Die Achse 52 wird in dem Innenraum 62 von einem Rad 65 umgeben, das einen hier sichtbaren, oberen Teil 78 und einen hier nicht sichtbaren, unteren Teil (siehe Figur 7) mit jeweils acht Speichen 66 umfasst. Die jeweils von der Achse 52 abgewandten Seitenflächen des oberen Teils 78 und des unteren Teils des Rads 65 umfassen entlang eines Teilumfangs jeweils dreizehn Einbuchtungen 67 in Form von Kreissegmenten. Die Einbuchtungen 67 sind derart ausgebildet, dass Elektrodenkappen teilumfänglich darin aufgenommen werden können, und wenn die Elektrodenkappen darin teilumfänglich aufgenommen sind, können sie auf einer ersten Kreislinie 63 die eine (für die beiden Elektrodenkappen an den beiden Enden des Teilumfangs) oder die beiden (für die anderen Elektrodenkappen) benachbarten Elektrodenkappen an einer Stelle ihres jeweiligen Umfangs berühren. Die erste Kreislinie 63 verläuft durch die Mittelachsen der Elektrodenkappen, die in den Einbuchtungen 67 angeordnet sein können und weist einen ersten Radius R1 auf.

Zwischen dem Mantel 45 des Kappenmagazins 43 und den Elektrodenkappen auf der ersten Kreislinie 20 können weitere Elektrodenkappen auf einer zweiten Kreislinie 64 angeordnet sein. Die zweite Kreislinie 64 verläuft durch die Mittelachsen dieser Elektrodenkappen und weist einen zweiten Radius R2 auf. Elektrodenkappen auf der zweiten Kreislinie 64 können berühren jeweils zwei der Elektrodenkappen, die auf der ersten Kreislinie 63 angeordnet sind, an einer Stelle ihres jeweiligen Umfangs und den Mantel 45 im Innenraum 62 an jeweils einer Stelle. Dadurch können bei einer Drehung des Rads 65 um die Achse 52 in eine erste Drehrichtung 29 (hier im Uhrzeigersinn) die Elektrodenkappen auf der ersten Kreislinie 63 mittels der Einbuchtungen 67 vorwärtsbewegt werden und die Elektrodenkappen auf der zweiten Kreislinie 64 werden dadurch mit vorwärtsbewegt.

Die Drehung des Rads 65 in die erste Drehrichtung 29 wird durch eine vorgespannte Spiralfeder 68 erreicht, die die Achse 52 umgibt, die an der Achse 52 an einer ersten Stelle 69 und an dem Rad 65 an einer zweiten Stelle 70 befestigt ist. Wird eine Elektrodenkappe 6 in der Bereitstellungsposition aus dem Ausbringbereich 54 entfernt, so wird das Rad 65 durch die Federkraft in die erste Drehrichtung 29 bewegt und eine neue Elektrodenkappe 6 kann in die Bereitstellungsposition im Ausbringbereich 54 eingebracht werden. Dabei werden Elektrodenkappen von der ersten Kreislinie 63 oder der zweiten Kreislinie 64 mit der Führungsvorrichtung 57 in den Ausbringbereich 54 geführt.

Auf der zweiten Kreislinie 64 ist zudem ein Ausschieber 71 mit einer Außenform in Form einer Elektrodenkappe vorgesehen, der mit einer Verbindungsvorrichtung 72 mit der von der Achse 52 abgewandten Seitenfläche des Rads 65 verbunden ist. In die erste Drehrichtung 29 gesehen, sind der Ausschieber 71 und die Verbindungsvorrichtung 72 hinter den im Innenraum 62 vorhandenen Elektrodenkappen angeordnet. So können bei einer Drehung in die erste Drehrichtung 29 und wenn die Elektrodenkappen nach und nach von der ersten Kreislinie 63 oder der zweiten Kreislinie 64, und von der Führungsvorrichtung 57 geführt, in den Ausbringbereich 54 überführt und dann durch einen Schweißarm aus dem Kappenmagazin entfernt werden, der Ausschieber 71 und die Verbindungsvorrichtung 72 dafür sorgen, dass keine Elektrodenkappe auf der ersten oder der zweiten Kreislinie 63, 64 oder im Bereich der Führungsvorrichtung 57 verbleibt, wenn die vorwärtstreibende Kraft durch benachbarte Elektrodenkappen und /oder die Einbuchtungen 67 des Rads 65 nicht mehr ausreichend oder gar nicht mehr übertragen wird.

Die Figur 7 zeigt eine schematische Schnittansicht der Kappenmagazineinheit 42 in einer Ebene parallel zu den Achsen 52, 52. Vom oberen/unteren Kappenmagazin 43, 43, ist somit der durch die Bodenplatte 44, 44₁, den Mantel 45, 45, und den Deckel 46, 46₁ begrenzte Innenraum 62, 62, zu erkennen.

Die beiden Achsen 52, 52, ragen mit dem ersten Ende, das die Adaptervorrichtung 53, 53, umfasst, aus dem Gehäuse 50, 50, heraus.

Das zweite Ende 73 der Achse 52 des oberen Kappenmagazins 43 ragt aus der Bodenplatte 44 heraus und ist derart dimensioniert, dass es nicht durch das Achsloch in der Bodenplatte 44 in den Innenraum 62 des Kappenmagazins 43 hineinrutschen kann. Auf der äußeren Oberfläche der Bodenplatte 44 ist eine Einrastplatte 76 mit einer Aussparung angeordnet, in die das zweite Ende 73 einbringbar ist. Zudem umfasst die Achse 52 eine Aushöhlung 74, die sich ausgehend vom zweiten Ende 73 in die Achse 52 hineinerstreckt.

Auch das zweite Ende 73, der Achse 52₁ des unteren Kappenmagazins 43₁ ragt aus der Bodenplatte 44₁ heraus und ist derart dimensioniert, dass es nicht durch das Achsloch in der Bodenplatte 44, in den Innenraum 62₁ des Kappenmagazins 43₁ hineinrutschen kann. Auf der äußeren Oberfläche der Bodenplatte 44₁ ist eine Einrastplatte 76₁ mit einer Aussparung angeordnet, in die das zweite Ende 73, einbringbar ist. Zudem umfasst die Achse 52₁ einen Stift 75, der das zweite Ende 73₁ überragt und sich in die Achse 52₁ hineinerstreckt.

Der Stift 75 und die Aushöhlung 74 sind derart ausgebildet, dass der Teil des Stifts 75, der das zweite Ende 73₁ überragt, in die Aushöhlung 74 einbringbar ist.

In dem Gehäuse 50, 50₁, das mit Schrauben 51, 51, auf der äußeren Oberfläche des Deckels 46, 461 befestigt ist, ist eine Druckfeder 77, 77, angeordnet, die die Achse 52 52₁ umgibt. Die Druckfeder 77, 77, kann auch als Wellenfeder oder dergleichen ausgebildet sein. Die eine Endwindung der Druckfeder 77, 77, ruht auf der äußeren Oberfläche des Deckels 46, 46, und die andere Endwindung der Druckfeder 77, 77₁ ruht auf einem Wulst 80, 80₁, der die Achse 52, 52, innerhalb des Gehäuses 50, 50₁ umfänglich umgibt. Durch eine Bewegung der Achse 52, 52, in die zweite Richtung 36, 36₁, beispielsweise ausgelöst durch Aufbringen eines entsprechend der Adaptervorrichtung 13, 13₁ komplementär ausgebildeten Steckschlüssels auf die Adaptervorrichtung 53, 53₁ und Bewegen in die zweite Richtung 36, 36₁, kann der Wulst 80, 80, die Druckfeder 77, 77₁ zusammendrücken, so dass das zweite Ende 73, 73, aus der Einrastplatte 76, 76₁ ausgebracht werden kann. Dadurch ist es möglich, die Achse 52, 52, in eine zweite Drehrichtung 38, 38₁ zu drehen, um beispielweise die Spiralfeder 68, 68, neu zu spannen. Nach dem Spannen der Spiralfeder 68, 68, kann die Achse 52, 52, in die erste Richtung 35, 35, bewegt werden, um das zweite Ende 73, 73, wieder in die Einrastplatte 76, 76₁ einbringen zu können. Das zweite Ende 73, 73, kann hierbei als gleichseitiges Dreieck, als Quadrat, als gleichseitiges Fünfeck, als gleichseitiges Sechseck oder dergleichen ausgebildet sein und eine Aussparung der Einrastplatte 76, 76₁ entsprechend ebenfalls dreieckig, quadratisch, fünfeckig oder sechseckig, so dass das zweite Ende 73, 73, in der Aussparung aufgenommen werden kann. Zum Drehen der Achse 52, 52, sind dann Winkel eines Vielfachen von 120°, 90°, 72° bzw. 60° sinnvoll.

Die um die Achse 52, 52, angeordnete Spiralfeder 68, 68₁ ist an der Achse 52, 52, an der ersten Stelle 69, 69, befestigt; dafür ist eine Aussparung 81, 81, in der Achse 52, 52, vorgesehen, in die die Spiralfeder 68, 68, beispielsweise eingesteckt und befestigt werden kann. Die Spiralfeder 68, 68, ist in einem Bereich zwischen dem oberen Teil 78, 78, und dem unteren Teil 79, 79, des Rads 65, 65, angeordnet, wobei ein Abstand D3 zwischen dem oberen 78, 78₁ und dem unteren Teil 79, 79, derart bemessen ist, dass die Spiralfeder 68, 68₁ dazwischen passt und auch eine Bewegung in die zweite Richtung 36, 36₁, die durch eine entsprechende Bewegung der Achse 52, 52, in die zweite Richtung 36, 36, bedingt wird, möglich ist.

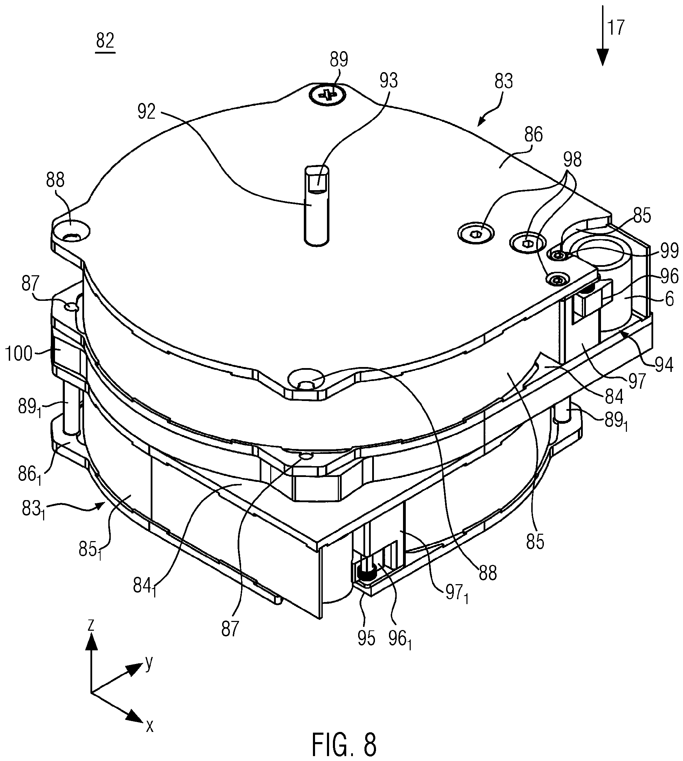

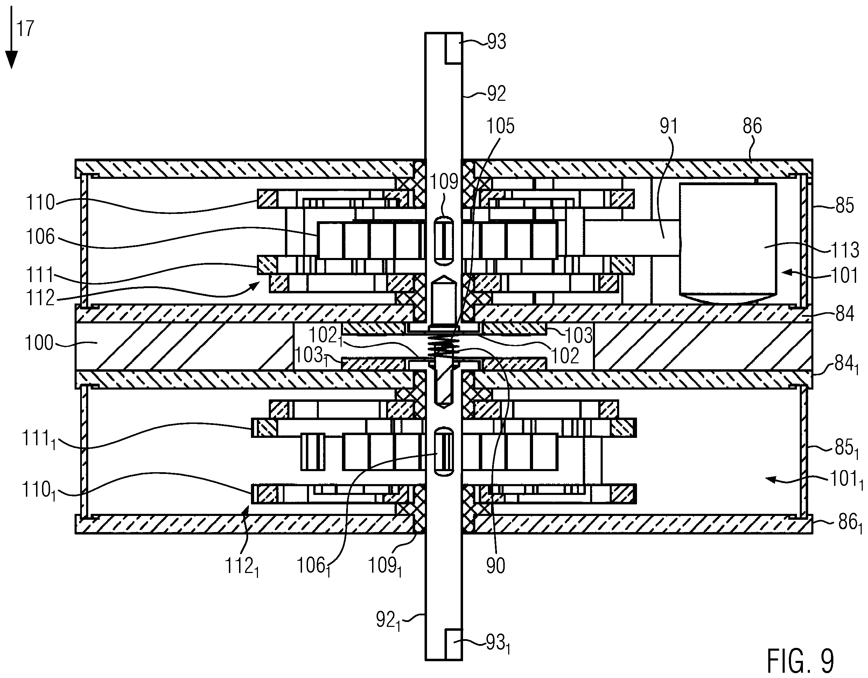

Die Figur 8 zeigt eine schematische Schrägansicht von oben auf eine dritte Ausführungsform einer Kappenmagazineinheit 82 mit einem oberen Kappenmagazin 83 und einem unteren Kappenmagazin 83₁. Da das obere 83 und das untere Kappenmagazin 83₁, bis auf die Achsen 92, 92₁ baugleich ausgebildet sein können, wird im Folgenden Bezug auf das obere Kappenmagazin 83 genommen. Die Unterschiede der Achsen 92, 92, werden in der Figur 9 näher erläutert.

In der Darstellung sind von dem oberen Kappenmagazin 83 ein Teil einer Bodenplatte 84, ein Teil des Mantels 85 und der Deckel 86 zu sehen. Der Mantel 85 ist bis auf einen Ausbringbereich 94 der Elektrodenkappen 6 kreiszylindrisch ausgebildet und umhüllt einen Innenbereich des Kappenmagazins 83. Die Bodenplatte 84 und der Deckel 86 weisen außerhalb des Innenbereichs jeweils durchgängige Bohrungen 87, 88 auf, in die Befestigungsmittel 89, wie Schrauben, eingebracht werden können, um das obere Kappenmagazin 83 mit dem unteren Kappenmagazin 83, und/oder an/mit einer nicht dargestellten Haltestruktur oder dergleichen befestigen zu können.

Die Achse 92, die einer Mittelachse des Kreiszylinders, mit dem der Mantel 85 angenähert werden kann, entspricht, ragt mit einem ersten Ende aus dem Deckel 86 hinaus und weist an diesem ersten Ende eine Adaptervorrichtung 93 für einen entsprechend komplementär ausgebildeten Steckschlüssel auf, der auf die Adaptervorrichtung 93 aufbringbar ausgebildet ist.

In der Figur 8 ist in einer Bereitstellungsposition im Ausbringbereich 94 der Elektrodenkappen 6 eine Elektrodenkappe 6 angeordnet. Im Ausbringbereich 94 weist der Deckel 86 des Kappenmagazins 83 eine Aussparung 95 auf, so dass ein Schweißarm ohne Elektrodenkappe von oben, d.h. parallel zu der Achse 92, in die in der Bereitstellungsposition im Ausbringbereich 94 angeordnete Elektrodenkappe 6 einbringbar ist. Die Elektrodenkappe 6 wird von einem Zurückhalter 96, der mittels einer Federkraft einer Rückstellfeder wirkt, in dem Kappenmagazin 83 zurückgehalten. Mit einem nichtsichtbaren Niederhalter, dessen Befestigungsschraube 99 erkennbar ist, wird die Elektrodenkappe 6 in der Bereitstellungsposition im Ausbringbereich 94 an einer unerwünschten Bewegung nach oben gehindert. Mittels einer Führungsvorrichtung 97, die sich von einem Innenraum des Kappenmagazins 83 bis in den Ausbringbereich 84 erstreckt und die mit Schrauben 98 an dem Deckel 86 befestigt ist, werden die Elektrodenkappen 6 in den Ausbringbereich 94 geführt. Die Federkraft des Zurückhalters 96 ist derart bemessen, dass ein Schweißarm, nachdem er die Elektrodenkappe 6 aufgenommen hat, die Elektrodenkappe 6 bei einer Bewegung senkrecht zu der Achse 92 in x-Richtung aus dem Kappenmagazin 83 durch Überwinden der Federkraft entfernen kann.

Das obere Kappenmagazin 83 weist mit einer äußeren Oberfläche seines Deckels 86 entgegen einer Wirkrichtung 17 der Schwerkraft und mit einer äußeren Oberfläche seiner Bodenplatte 84 in die Wirkrichtung 17 der Schwerkraft. Der Deckel 86 und die Bodenplatte 84 sind jeweils senkrecht zur Wirkrichtung 17 der Schwerkraft ausgerichtet.

Das untere Kappenmagazin 83₁ ist hinsichtlich des oberen Kappenmagazins 83 derart ausgerichtet, dass eine äußere Oberfläche der Bodenplatte 84₁ des unteren Kappenmagazins 83₁ entgegen der Wirkrichtung 17 der Schwerkraft weist und seine Bodenplatte 86₁ parallel zu der Bodenplatte 84 des oberen Kappenmagazins 83 verläuft.

Die beiden Ausbringbereiche 94, 94, sind auf einer Seite der Kappenmagazineinheit 82 angeordnet. Eine virtuelle Verlängerung einer Achse 92 des oberen Kappenmagazins 83, die weiter unten genauer beschrieben wird, und eine virtuelle Verlängerung einer in der Figur 8 nicht sichtbaren Achse des unteren Kappenmagazins 83₁, sind ineinander übergehend angeordnet; die beiden Achsen sind koaxial ausgerichtet.

Zwischen der äußeren Oberfläche der Bodenplatte 86₁ des unteren Kappenmagazins 83₁ und der äußeren Oberfläche der Bodenplatte 86 des unteren Kappenmagazins 83 ist eine Distanzplatte 100 angeordnet.

Die beiden Kappenmagazine 83, 83, sind somit derart ausgerichtet, dass aus beiden Kappenmagazinen 83, 83₁ eine durch einen Schweißarm aufgenommene Elektrodenkappe 6, 6₁ bei einer Bewegung parallel zur x-Achse aus dem jeweiligen Kappenmagazin 83, 83, entfernt werden kann.

Da das untere Kappenmagazin 83₁ mit der Bodenplatte 84₁ nach oben weist, verhindert der nicht sichtbare Niederhalter ein Herausfallen, d.h. eine unerwünschte Bewegung nach unten, einer Elektrodenkappe 6₁ in der Bereitstellungsposition aus dem Ausbringbereich 94.

Die Figur 9 zeigt eine schematische Schnittansicht der Kappenmagazineinheit 82 in einer Ebene parallel zu den Achsen 92, 92₁. Vom oberen/unteren Kappenmagazin 83, 83₁ ist somit der durch die Bodenplatte 84, 84₁, den Mantel 85, 85₁ und den Deckel 86, 86₁ begrenzte Innenraum 101, 101₁ zu erkennen.

Die beiden Achsen 92, 92₁ ragen mit dem ersten Ende, das die Adaptervorrichtung 93, 93, umfasst, aus dem jeweiligen Deckel 86, 86, heraus.

Das zweite Ende 102 der Achse 92 des oberen Kappenmagazins 83 ragt aus der Bodenplatte 84 heraus und ist derart dimensioniert, dass es nicht durch das Achsloch in der Bodenplatte 84 in den Innenraum 101 des Kappenmagazins 83 hineinrutschen kann. Auf der äußeren Oberfläche der Bodenplatte 84 ist eine Einrastplatte 103 mit einer Aussparung angeordnet, in die das zweite Ende 102 einbringbar ist. Zudem umfasst die Achse 92 eine Aushöhlung 104, die sich ausgehend vom zweiten Ende 102 in die Achse 92 hineinerstreckt.

Auch das zweite Ende 102₁ der Achse 92₁ des unteren Kappenmagazins 83₁ ragt aus der Bodenplatte 84₁ heraus und ist derart dimensioniert, dass es nicht durch das Achsloch in der Bodenplatte 84, in den Innenraum 101₁ des Kappenmagazins 83₁ hineinrutschen kann. Auf der äußeren Oberfläche der Bodenplatte 84₁ ist eine Einrastplatte 103₁ mit einer Aussparung angeordnet, in die das zweite Ende 102₁ einbringbar ist. Zudem umfasst die Achse 92₁ einen Stift 105, der das zweite Ende 102, überragt und sich in die Achse 92₁ hineinerstreckt.

Der Stift 105 und die Aushöhlung 104 sind derart ausgebildet, dass der Teil des Stifts 105, der das zweite Ende 102₁ überragt, in die Aushöhlung 104 einbringbar ist.

Zwischen den beiden zweiten Enden 102, 102₁ ist eine Druckfeder 90 angeordnet. Die Druckfeder 90 kann auch als Wellenfeder oder dergleichen ausgebildet sein. Durch eine Bewegung der Achse 92, 92, in die zweite Richtung 36, 36₁, beispielsweise ausgelöst durch Aufbringen eines entsprechend der Adaptervorrichtung 93, 93₁ komplementär ausgebildeten Steckschlüssels auf die Adaptervorrichtung 93, 93₁ und Bewegen in die zweite Richtung 36, 36₁, kann die Druckfeder zusammengedrückt werden, so dass das zweite Ende 102, 102₁ aus der Einrastplatte 103, 103₁ ausgebracht werden kann. Dadurch ist es möglich, die Achse 92, 92₁ in eine zweite Drehrichtung 38, 38, zu drehen, um beispielweise die Spiralfeder 106, 106₁ neu zu spannen. Nach dem Spannen der Spiralfeder 106, 106₁ kann die Achse 92, 92, in die erste Richtung 35, 35, bewegt werden, um das zweite Ende 102, 102, wieder in die Einrastplatte 103, 103₁ einbringen zu können. Das zweite Ende 102, 102, kann hierbei als gleichseitiges Dreieck, als Quadrat, als gleichseitiges Fünfeck, als gleichseitiges Sechseck oder dergleichen ausgebildet sein und eine Aussparung der Einrastplatte 103, 103₁ entsprechend ebenfalls dreieckig, quadratisch, fünfeckig oder sechseckig, so dass das zweite Ende 102, 102₁ in der Aussparung aufgenommen werden kann. Zum Drehen der Achse 92, 92, sind dann Winkel eines Vielfachen von 120°, 90°, 72° bzw. 60° sinnvoll.

Die um die Achse 92, 92, angeordnete Spiralfeder 106, 106₁ ist an der Achse 92, 92, an der ersten Stelle 107, 107, befestigt; dafür ist eine Aussparung 109, 109, in der Achse 92, 92, vorgesehen, in die die Spiralfeder 106, 106, beispielsweise eingesteckt und befestigt werden kann. Die Spiralfeder106, 106, ist in einem Bereich zwischen dem oberen Teil 110, 110, und dem unteren Teil 111, 111, des Rads 112, 112₁ angeordnet, wobei ein Abstand D4 zwischen dem oberen 109, 109₁ und dem unteren Teil 110, 110, derart bemessen ist, dass die Spiralfeder 106, 106, dazwischen passt und auch eine Bewegung in die zweite Richtung 36, 36₁, die durch eine entsprechende Bewegung der Achse 92, 92, in die zweite Richtung 36, 36, bedingt wird, möglich ist.

Zudem ist im oberen Kappenmagazin 83 ein Ausschieber 113 zu sehen, der mit einer Verbindungsvorrichtung 91 an dem Rad 112 angeordnet ist.

## Patentansprüche

1. Kappenmagazin (2, 2₁, 43, 43₁, 83, 83₁) zum Bereitstellen von Elektrodenkappen (6, 6₁) in einer Bereitstellungsposition in einem Ausbringbereich (14, 14₁, 54, 54₁, 94, 94₁) für eine Aufnahme durch einen Schweißarm, wobei das Kappenmagazin (2, 2₁, 43, 43₁, 83, 83₁) einen Innenraum (18, 18₁, 62, 62₁, 101, 101₁), in dem Elektrodenkappen (6, 6₁) anordenbar sind, und eine Achse (12, 12₁, 52, 52₁, 92, 92₁), um die die im Innenraum (18, 18₁, 62, 62₁, 101, 101₁) anordenbaren Elektrodenkappen (6, 6₁) in eine Drehrichtung (29) um die Achse (12, 12₁, 52, 52₁, 92, 92₁) auf die Bereitstellungsposition zu bewegbar sind, umfasst,
wobei die in dem Innenraum (18, 18₁, 62, 62₁, 101, 101₁) anordenbaren Elektrodenkappen (6, 6₁) in der Drehrichtung (29) um die Achse (12, 12₁, 52, 52₁, 92, 92₁) auf die Bereitstellungsposition vorgespannt sind,
wobei der Innenraum (18, 18₁, 62, 62₁, 101, 101₁) von einer Bodenplatte (3, 3₁, 44, 44₁, 84, 84₁), einem Deckel (5, 5₁, 46, 46₁, 86, 86₁) und einem zumindest teilweise kreiszylindrischen Mantel (4, 4₁, 45, 45₁, 85, 85₁) des Kappenmagazins (2, 2₁, 43, 43₁, 83, 83₁) begrenzt wird
**dadurch gekennzeichnet, dass**
die Achse (12, 12₁, 52, 52₁, 92, 92₁) an einem ersten Ende, das aus dem Innenraum (18, 18₁, 62, 62₁, 101, 101₁) durch den Deckel (5, 5₁, 46, 46₁, 86, 86₁) hinausragt, eine Adaptervorrichtung (13, 13₁, 53, 53₁, 93, 93₁) umfasst,
das Kappenmagazin weiter ein Gehäuse (10, 10₁, 50, 50₁) umfasst, das außerhalb des Innenraums (18, 18₁, 62, 62₁) auf dem Deckel (5, 5₁, 46, 46₁) angeordnet ist und durch das sich die Achse (12, 12₁, 52, 52₁) zumindest teilweise erstreckt,
ein zweites Ende (32, 32₁, 73, 73₁, 102, 102₁) der Achse (12, 12₁, 52, 52₁, 92, 92₁), dessen Querschnitt größer als ein Querschnitt eines Achslochs der Achse (12, 12₁, 52, 52₁, 92, 92₁) in der Bodenplatte (3, 3₁, 44, 44₁, 84, 84₁) ist, aus der Bodenplatte (3, 3₁, 44, 44₁, 84, 84₁) herausragt, wobei auf der Bodenplatte (3, 3₁, 44, 44₁, 84, 84₁) eine Einrastplatte (33, 33₁, 76, 76₁, 103, 103₁) mit einer Aussparung vorgesehen ist, wobei das zweite Ende (32, 32₁, 73, 73₁, 102, 102₁) und die Aussparung jeweils derart ausgebildet sind, dass das zweite Ende (32, 73, 73₁, 102, 102₁) formschlüssig von der Aussparung aufnehmbar ist,
wobei ein im Innenraum (18, 18₁, 62, 62₁, 101, 101₁) um die Achse (12, 12₁, 52, 52₁, 92, 92₁) angeordnetes Rad (23, 23₁, 65, 65₁, 112, 112₁) eine Vielzahl von Einbuchtungen (25, 25₁, 67, 67₁) entlang eines Umfangs des Rads (23, 23₁, 65, 65₁, 112, 112₁) umfasst,
um die Achse (12, 12₁, 52, 52₁, 92, 92₁) eine vorspannbare Spiralfeder (26, 26₁, 68, 68₁, 106, 106₁) vorgesehen ist, die ausgebildet ist, das Rad (23, 23₁, 65, 65₁, 112, 112₁) in die Drehrichtung (29) um die Achse (12, 12₁, 52, 52₁, 92, 92₁) zu drehen, wodurch die in dem Innenraum (18, 18₁, 62, 62₁, 101, 101₁) anordenbaren Elektrodenkappen (6, 6₁) in der Drehrichtung (29) um die Achse (12, 12₁, 52, 52₁, 92, 92₁) auf die Bereitstellungsposition vorgespannt sind.

2. Das Kappenmagazin (2, 2₁, 43, 43₁) nach Anspruch 1, wobei innerhalb des Gehäuses (10, 10₁, 50, 50₁) die Achse (12, 12₁, 52, 52₁) von einer Druckfeder (34, 34₁, 77, 77₁) umgeben ist und die Achse (12, 12₁, 52, 52₁) einen Wulst (37, 37₁, 80, 80₁) umfasst, der die Achse (12, 12₁, 52, 52₁) innerhalb des Gehäuses (10, 10₁, 50, 50₁) umfänglich umgibt und auf dem eine erste Endwindung der Druckfeder (34, 34₁, 77, 77₁) ruht, wobei eine zweite Endwindung der Druckfeder (34, 34₁, 77, 77₁) auf dem Deckel (5, 5₁, 46, 46₁) ruht.

3. Das Kappenmagazin (43, 43₁, 83, 83₁) nach Anspruch 1 oder 2, wobei das zweite Ende (73, 73₁, 102, 102₁) einen Stift (75, 105) umfasst, der das zweite Ende (73, 73₁, 102, 102₁) überragt und sich zudem in die Achse (52, 52₁, 92, 92₁) hineinerstreckt oder wobei das zweite Ende (73, 73₁, 102, 102₁) eine Aushöhlung (74, 104) umfasst, die sich ausgehend von dem zweiten Ende (73, 73₁, 102, 102₁) in die Achse (52, 52₁, 92, 92₁) hineinerstreckt.

4. Das Kappenmagazin (2, 2₁, 43, 43₁, 83, 83₁) nach einem der Ansprüche 1 bis 3, wobei die Einbuchtungen (25, 25₁, 67, 67₁) kreissegmentartig ausgebildet sind und weiter derart ausgebildet sind, dass erste bereitzustellende Elektrodenkappen (6, 6₁) darin teilumfänglich aufnehmbar und auf einem ersten Radius anordenbar sind.

5. Das Kappenmagazin (2, 2₁, 43, 43₁, 83, 83₁) nach Anspruch 4, wobei ein radialer Abstand zwischen dem Mantel (4, 4₁, 45, 45₁, 85, 85₁) und einer Mitte einer der Einbuchtungen (25, 25₁, 67, 67₁) derart ausgebildet ist, dass zweite bereitzustellende Elektrodenkappen (6, 6₁) auf einem zweiten Radius, der größer als der erste Radius ist, derart anordenbar sind, dass die zweiten bereitzustellenden Elektrodenkappen (6, 6₁) zumindest teilweise den Mantel (4, 4₁, 45, 45₁, 85, 85₁) und die ersten bereitzustellenden Elektrodenkappen (6, 6₁) berühren.

6. Das Kappenmagazin (2, 2₁, 43, 43₁, 83, 83₁) nach einem der Ansprüche 4 bis 5, wobei weiter eine Ausschiebevorrichtung (30, 30₁, 70, 70₁, 31, 31₁, 72, 72₁) vorgesehen ist, die sich zumindest teilweise zwischen dem Rad (23, 23₁, 65, 65₁, 112, 112₁) und dem Mantel (4, 4₁, 45, 45₁, 85, 85₁) erstreckt und die ausgebildet ist, die ersten und zweiten bereitzustellenden Elektrodenkappen (6, 6₁) bei einer Drehung in die Drehrichtung (29) in die Drehrichtung (29) zu schieben.

7. Das Kappenmagazin (2, 2₁, 43, 43₁, 83, 83₁) nach Anspruch 6, wobei die Ausschiebevorrichtung (30, 30₁, 70, 70₁, 31, 31₁, 72, 72₁) einen Ausschieber (30, 30₁, 70, 70₁) mit einer Außenform in Form einer Elektrodenkappe (6, 6₁) und eine Verbindungsvorrichtung (31, 31₁, 72, 72₁) umfasst, wobei die Verbindungsvorrichtung (31, 31₁, 72, 72₁) den Ausschieber (30, 30₁, 70, 70₁) mit dem Rad (23, 23₁, 65, 65₁, 112, 112₁) verbindet.

8. Das Kappenmagazin (2, 2₁, 43, 43₁, 83, 83₁) nach einem der Ansprüche 1 bis 7, wobei der Deckel (5, 5₁, 46, 46₁, 86, 86₁) im Ausbringbereich (14, 14₁, 54, 54₁, 94, 94₁) eine Aussparung (15, 15₁, 55, 55₁, 95, 95₁) umfasst.

9. Das Kappenmagazin (2, 2₁, 43, 43₁, 83, 83₁) nach Anspruch einem der Ansprüche 1 bis 8, wobei in dem Ausbringbereich (14, 14₁, 54, 54₁, 94, 94₁) ein Zurückhalter (16, 16₁, 56, 56₁, 96, 96₁) und ein Niederhalter (60) für jeweils eine Elektrodenkappe (6, 6₁) vorgesehen sind.

10. Das Kappenmagazin (2, 2₁, 43, 43₁, 83, 83₁) nach einem der Ansprüche 1 bis 9, weiter umfassend eine Führungsvorrichtung (22, 22₁, 57, 57₁, 97, 97₁), die sich von dem Innenraum (18, 18₁, 62, 62₁, 101, 101₁) bis in den Ausbringbereich (14, 14₁, 54, 54₁, 94, 94₁) erstreckt.

11. Das Kappenmagazin (2, 2₁, 43, 43₁, 83, 83₁) nach einem der Ansprüche 6 bis 10, wobei die Spiralfeder (26, 26₁, 68, 68₁, 106, 106₁) an der Achse (12, 12₁, 52, 52₁, 92, 92₁) und an dem Rad (23, 23₁, 65, 65₁, 112, 112₁) befestigt ist.

12. Kappenmagazineinheit mit einem ersten und einem zweiten Kappenmagazin (2, 2₁, 43, 43₁, 83, 83₁) nach einem der Ansprüche 1 bis 11, wobei eine Achse (12, 52, 92) des ersten Kappenmagazins (2, 43, 83) und eine Achse (12₁, 52₁, 92₁) des zweiten Kappenmagazins (2₁, 43₁, 83₁) koaxial ausgerichtet sind, wobei eine äußere Oberfläche einer ersten Bodenplatte (3, 44, 84) des ersten Kappenmagazins (2, 43, 83) zu einer äußeren Oberfläche einer zweiten Bodenplatte (3₁, 44₁, 84₁) des zweiten Kappenmagazins (2₁, 43₁, 83₁) weist und wobei zwischen der äußeren Oberfläche der ersten Bodenplatte (3, 44, 84) und der äußeren Oberfläche der zweiten Bodenplatte (3₁, 44₁, 84₁) ein Abstand (D1) ausgebildet ist.

13. Die Kappenmagazineinheit nach Anspruch 12, wobei zwischen der äußeren Oberfläche der ersten Bodenplatte (44, 84) und der äußeren Oberfläche der zweiten Bodenplatte (44₁, ne Distanzplatte (61, 100) vorgesehen ist.

14. Die Kappenmagazineinheit nach Anspruch 12 oder 13, mit zwei Kappenmagazinen (43, 43₁, 83, 83₁) nach einem der Ansprüche 7 bis 16, wobei die Achse (52, 92) des ersten Kappenmagazins (43, 83) eine Aushöhlung (74, 104) aufweist und wobei die Achse (52₁, 92₁) des zweiten Kappenmagazins (43₁, 83₁) einen Stift (75, 105) aufweist.

15. Die Kappenmagazineinheit nach Anspruch 14, wobei zwischen einem zweiten Ende der Achse (92) des ersten Kappenmagazins (83) und einem zweiten Ende der Achse (92₁) des zweiten Kappenmagazins (83₁) eine Druckfeder (90) angeordnet ist, die den Stift (105) teilweise umgibt.

## Claims

1. A cap magazine (2, 2₁, 43, 43₁, 83, 83₁) for providing electrode caps (6, 6₁) at a pick-up position in an output area (14, 14₁, 54, 54₁, 94, 94₁) for picking up by a welding arm, wherein the cap magazine (2, 2₁, 43, 43₁, 83, 83₁) comprises an interior (18, 18₁, 62, 62₁, 101, 101₁), in which electrode caps (6, 6₁) can be arranged, and an axle (12, 12₁, 52, 52₁, 92, 92₁) around which the electrode caps (6, 6₁), which are adapted to be arranged in the interior (18, 18₁, 62, 62₁, 101, 101₁), are movable in a direction of rotation (29) around the axle (12, 12₁, 52, 52₁, 92, 92₁) towards the pick-up position, comprises
the electrode caps (6, 6₁), which are adapted to be arranged in the interior (18, 18₁, 62, 62₁, 101, 101₁), are preloaded in the direction of rotation (29) around the axle (12, 12₁, 52, 52₁, 92, 92₁) towards the pick-up position,
wherein the interior (18, 18₁, 62, 62₁, 101, 101₁) is delimited by a base plate (3, 3₁, 44, 44₁, 84, 84₁), a lid (5, 5₁, 46, 46₁, 86, 86₁) and an at least partially circular-cylindrical jacket (4, 4₁, 45, 45₁, 85, 85₁) of the cap magazine (2, 2₁, 43, 43₁, 83, 83₁),
**characterised in that**
the axle (12, 12₁, 52, 52₁, 92, 92₁) comprises, at a first end thereof, an adapter device (13, 13₁, 53, 53₁, 93, 93₁), the first end projecting beyond the interior (18, 18₁, 62, 62₁, 101, 101₁) through the lid (5, 5₁, 46, 46₁, 86, 86₁),
the cap magazine further comprising a housing (10, 10₁, 50, 50₁), which is arranged outside the interior (18, 18₁, 62, 62₁) on the lid (5, 5₁, 46, 46₁) and through which the axle (12, 12₁, 52, 52₁) extends at least partially,
a second end (32, 32₁, 73, 73₁, 102, 102₁) of the axle (12, 12₁, 52, 52₁, 92, 92₁), whose cross-section is larger than a cross-section of an axle hole of the axle (12, 12₁, 52, 52₁, 92, 92₁) provided in the base plate (3, 3₁, 44, 44₁, 84, 84₁), projects beyond the base plate (3, 3₁, 44, 44₁, 84, 84₁), the base plate (3, 3₁, 44, 44₁, 84, 84₁) having provided thereon a locking plate (33, 33₁, 76, 76₁, 103, 103₁) with an opening, wherein the second end (32, 32₁, 73, 73₁, 102, 102₁) and the opening being each configured such that the second end (32, 32₁, 73, 73₁, 102, 102₁) is adapted to be accommodated in the opening in form-fit engagement therewith,
wherein a wheel (23, 23₁, 65, 65₁, 112, 112₁), which is arranged around the axle (12, 12₁, 52, 52₁, 92, 92₁) in the interior (18, 18₁, 62, 62₁, 101, 101₁), comprises a plurality of recesses (25, 25₁, 67, 67₁) along a circumference of the wheel (23, 23₁, 65, 65₁, 112, 112₁),
a preloadable spiral spring (26, 26₁, 68, 68₁, 106, 106₁) is arranged around the axle (12, 12₁, 52, 52₁, 92, 92₁), the spiral spring being configured to rotate the wheel (23, 23₁, 65, 65₁, 112, 112₁) in the direction of rotation (29) about the axle (12, 12₁, 52, 52₁, 92, 92₁), the electrode caps (6, 6₁), which are adapted to be arranged in the interior (18, 18₁, 62, 62₁, 101, 101₁), being thus preloaded in the direction of rotation (29) around the axle (12, 12₁, 52, 52₁, 92, 92₁) towards the pick-up position.

2. The cap magazine (2, 2₁, 43, 43₁) according to claim 1, wherein, within the housing (10, 10₁, 50, 50₁), the axle (12, 12₁, 52, 52₁) is surrounded by a compression spring (34, 34₁, 77, 77₁) and the axle (12, 12₁, 52, 52₁) comprises a bead (37, 37₁, 80, 80₁), which circumferentially surrounds the axle (12, 12₁, 52, 52₁) within the housing (10, 10₁, 50, 50₁) and on which a first end turn of the compression spring (34, 34₁, 77, 77₁) rests, a second end turn of the compression spring (34, 34₁, 77, 77₁) resting on the lid (5, 5₁, 46, 46₁).

3. The cap magazine (43, 43₁, 83, 83₁) according to claim 1 or 2, wherein the second end (73, 73₁, 102, 102₁) comprises a pin (75, 105), which projects beyond the second end (73, 73₁, 102, 102₁) and which additionally extends into the axle (52, 52₁, 92, 92₁), or wherein the second end (73, 73₁, 102, 102₁) comprises a cavity (74, 104), which extends from the second end (73, 73₁, 102, 102₁) into the axle (52, 52₁, 92, 92₁).

4. The cap magazine (2, 2₁, 43, 43₁, 83, 83₁) according to one of the claims 1 to 3, the recesses (25, 25₁, 67, 67₁) having a circular segment-like shape and being additionally configured such that first electrode caps (6, 6₁) to be provided can be accommodated therein along part of their circumference and arranged on a first radius.

5. The cap magazine (2, 2₁, 43, 43₁, 83, 83₁) according to claim 4, wherein a radial distance between the jacket (4, 4₁, 45, 45₁, 85, 85₁) and a center of one of the recesses (25, 25₁, 67, 67₁) is configured such that second electrode caps (6, 6₁) to be provided can be arranged on a second radius, which is larger than the first radius, such that the second electrode caps (6, 6₁) to be provided contact, at least partially, the jacket (4, 4₁, 45, 45₁, 85, 85₁) and the first electrode caps (6, 6₁) to be provided.

6. The cap magazine (2, 2₁, 43, 43₁, 83, 83₁) according to one of the claims 4 to 5, wherein a pushing device (30, 30₁, 70, 70₁, 31, 31₁, 72, 72₁) is additionally provided, which extends, at least partially, between the wheel (23, 23₁, 65, 65₁, 112, 112₁) and the jacket (4, 4₁, 45, 45₁, 85, 85₁) and which is configured to push, when a rotation in the direction of rotation (29) takes place, the first and second electrode caps (6, 6₁) to be provided into the direction of rotation (29).

7. The cap magazine (2, 2₁, 43, 43₁, 83, 83₁) according to claim 6, wherein the pushing device (30, 30₁, 70, 70₁, 31, 31₁, 72, 72₁) comprises a pusher (30, 30₁, 70, 70₁), which has an outer shape corresponding to that of an electrode cap (6, 6₁), and a connecting device (31, 31₁, 72, 72₁), the connecting device (31, 31₁, 72, 72₁) connecting the pusher (30, 30₁, 70, 70₁) with the wheel (23, 23₁, 65, 65₁, 112, 112₁).

8. The cap magazine (2, 2₁, 43, 43₁, 83, 83₁) according to one of the claims 1 to 7, wherein the lid (5, 5₁, 46, 46₁, 86, 86₁) comprises an opening (15, 15₁, 55, 55₁, 95, 95₁) in the output area (14, 14₁, 54, 54₁, 94, 94₁).

9. The cap magazine (2, 2₁, 43, 43₁, 83, 83₁) according to one of the claims 1 to 8, wherein the output area (14, 14₁, 54, 54₁, 94, 94₁) has provided therein a retainer (16, 16₁, 56, 56₁, 96, 96₁) and a downholder (60) for a respective one of the electrode caps (6, 6₁).

10. The cap magazine (2, 2₁, 43, 43₁, 83, 83₁) according to one of the claims 1 to 9, further comprising a guiding device (22, 22₁, 57, 57₁, 97, 97₁) extending from the interior (18, 18₁, 62, 62₁, 101, 101₁) up to and into the output area (14, 14₁, 54, 54₁, 94, 94₁).

11. The cap magazine (2, 2₁, 43, 43₁, 83, 83₁) according to one of the claims 6 to 10, wherein the spiral spring (26, 26₁, 68, 68₁, 106, 106₁) is fastened to the axle (12, 12₁, 52, 52₁, 92, 92₁) and to the wheel (23, 23₁, 65, 65₁, 112, 112₁).

12. A cap magazine unit comprising a first and a second cap magazine (2, 2₁, 43, 43₁, 83, 83₁) according to one of the claims 1 to 11, wherein an axle (12, 52, 92) of the first cap magazine (2, 43, 83) and an axle (12₁, 52₁, 92₁) of the second cap magazine (2₁, 43₁, 83₁) are oriented coaxially, wherein an outer surface of a first base plate (3, 44, 84) of the first cap magazine (2, 43, 83) faces an outer surface of a second base plate (3₁, 44₁, 84₁) of the second cap magazine (2₁, 43₁, 83₁), and wherein a distance (D1) is defined between the outer surface of the first base plate (3, 44, 84) and the outer surface of the second base plate (3₁, 44₁, 84₁).

13. The cap magazine unit according to claim 12, wherein a spacer plate (61, 100) is provided between the outer surface of the first base plate (44, 84) and the outer surface of the second base plate (44₁, 84₁).

14. The cap magazine unit according to claim 12 or 13, comprising two cap magazines (43, 43₁, 83, 83₁) according to one of the claims 7 to 16, wherein the axle (52, 92) of the first cap magazine (43, 83) is provided with a cavity (74, 104), and wherein the axle (52₁, 92₁) of the second cap magazine (43₁, 83₁) is provided with a pin (75, 105).

15. The cap magazine unit according to claim 14, wherein a compression spring (90), which partially surrounds the pin (105), is arranged between a second end of the axle (92) of the first cap magazine (83) and a second end of the axle (92₁) of the second cap magazine (83₁).

## Revendications

1. Magasin de capuchons (2, 2₁, 43, 43₁, 83, 83₁) permettant de fournir des capuchons d'électrodes (6, 6₁) dans une position de fourniture dans une région de mise en place (14, 14₁, 54, 54₁, 94, 94₁) en vue d'une réception par un bras de soudage, dans lequel le magasin de capuchons (2, 2₁, 43, 43₁, 83, 83₁) comprend un espace intérieur (18, 18₁, 62, 62₁, 10₁, 101₁), au sein duquel des capuchons d'électrodes (6, 6₁) peuvent être agencés et un axe (12, 12₁, 52, 52₁, 92, 92₁), autour duquel les capuchons d'électrodes (6, 6₁) pouvant être agencés dans l'espace intérieur (18, 18₁, 62, 62₁, 10₁, 101₁) peuvent être déplacés dans un sens de rotation (29) autour de l'axe (12, 12₁, 52, 52₁, 92, 92₁) jusqu'à la position de fourniture,
dans lequel les capuchons d'électrodes (6, 6₁) pouvant être agencés dans l'espace intérieur (18, 18₁, 62, 62₁, 10₁, 101₁) sont précontraints dans le sens de rotation (29) autour de l'axe (12, 12₁, 52, 52₁, 92, 92₁) jusqu'à la position de fourniture,
dans lequel l'espace intérieur (18, 18₁, 62, 62₁, 101, 101₁) est délimité par une plaque de fond (3, 3₁, 44, 44₁, 84, 84₁), un couvercle (5, 5₁, 46, 46₁, 86, 86₁) et une enveloppe (4, 4₁, 45, 45₁, 85, 85₁) au moins partiellement cylindrique circulaire du magasin de capuchons (2, 2₁, 43, 43₁, 83, 83₁)
**caractérisé en ce que**
l'axe (12, 12₁, 52, 52₁, 92, 92₁) comprend un dispositif d'adaptation (13, 13₁, 53, 53₁, 93, 93₁) au niveau d'une première extrémité dépassant de l'espace intérieur (18, 18₁, 62, 62₁, 101, 101₁) à travers le couvercle (5, 5₁, 46, 46₁, 86, 86₁),
le magasin de capuchons comprend en outre un boîtier (10, 10₁, 50, 50₁) agencé à l'extérieur de l'espace intérieur (18, 18₁, 62, 62₁,) sur le couvercle (5, 5₁, 46, 46₁) et à travers lequel l'axe (12, 12₁, 52, 52₁) s'étend au moins partiellement,
une seconde extrémité (32, 32₁, 73, 73₁, 102, 102₁) de l'axe (12, 12₁, 52, 52₁, 92, 92₁), dont la section transversale est supérieure à une section transversale d'un trou d'axe de l'axe (12, 12₁, 52, 52₁, 92, 92₁) dans la plaque de fond (3, 3₁, 44, 44₁, 84, 84₁), dépasse de la plaque de fond (3, 3₁, 44, 44₁, 84, 84₁), dans lequel une plaque d'encliquetage (33, 33₁, 76, 76₁, 103, 103₁) munie d'un évidement est fournie sur la plaque de fond (3, 3₁, 44, 44₁, 44₁, 84, 84₁), dans lequel la seconde extrémité (32, 32₁, 73, 73₁, 102, 102₁) et l'évidement sont respectivement conçus de telle manière que la seconde extrémité (32, 32₁, 73, 73₁, 102, 102₁) peut être accueillie par l'évidement de manière à être verrouillée par complémentarité de forme,
dans lequel une roue (23, 23₁, 65, 65₁, 112, 112₁) agencée dans l'espace intérieur (18, 18₁, 62, 62₁, 101, 101₁) autour de l'axe (12, 12₁, 52, 52₁, 92, 92₁) comprend une pluralité de renfoncements (25, 25₁, 67, 67₁) le long d'une circonférence de la roue (23, 23₁, 65, 65₁, 112, 112₁),
autour de l'axe (12, 12₁, 52, 52₁, 92, 92₁) est fourni un ressort hélicoïdal (26, 26₁, 68, 68₁, 106, 106₁) précontraint conçu pour faire tourner la roue (23, 23₁, 65, 65₁, 112, 112₁) dans le sens de rotation (29) autour de l'axe (12, 12₁, 52, 52₁, 92, 92₁), de sorte que les capuchons d'électrodes (6, 6₁) pouvant être agencés dans l'espace intérieur (18, 18₁, 62, 62₁, 101, 101₁) sont précontraints dans le sens de rotation (29) autour de l'axe (12, 12₁, 52, 52₁, 92, 92₁) jusqu'à la position de fourniture.

2. Magasin de capuchons (2, 2₁, 43, 43₁) selon la revendication 1, dans lequel l'axe (12, 12₁, 52, 52₁) est entouré à l'intérieur du boîtier (10, 10₁, 50, 50₁), par un ressort de compression (34, 34₁, 77, 77₁) et l'axe (12, 12₁, 52, 52₁) comprend un bourrelet (37, 37₁, 80, 80₁) qui entoure l'axe (12, 12₁, 52, 52₁) sur sa périphérie à l'intérieur du boîtier (10, 10₁, 50, 50₁) et sur lequel repose une première spire d'extrémité du ressort de compression (34, 34₁, 77, 77₁), dans lequel une seconde spire d'extrémité du ressort de compression (34, 34₁, 77, 77₁) repose sur le couvercle (5, 5₁, 46, 46₁).

3. Magasin de capuchons (43, 43₁, 83, 83₁) selon la revendication 1 ou 2, dans lequel la seconde extrémité (73, 73₁, 102, 102₁) comprend une broche (75, 105) qui dépasse de la seconde extrémité (73, 73₁, 102, 102₁) et qui s'étend également dans l'axe (52, 52₁, 92, 92₁), ou dans lequel la seconde extrémité (73, 73₁, 102, 102₁) comprend une cavité (74, 104) qui s'étend dans l'axe (52, 52₁, 92, 92₁) à partir de la seconde extrémité (73, 73₁, 102, 102₁).

4. Magasin de capuchons (2, 2₁, 43, 43₁, 83, 83₁) selon l'une quelconque des revendications 1 à 3, dans lequel les renfoncements (25, 25₁, 67, 67₁) sont conçus à la manière de segments de cercle et sont en outre conçus de telle manière que des premiers capuchons d'électrode (6, 6₁) à fournir peuvent y être partiellement accueillis et agencés sur un premier rayon.

5. Magasin de capuchons (2, 2₁, 43, 43₁, 83, 83₁) selon la revendication 4, dans lequel une distance radiale entre l'enveloppe (4, 4₁, 45, 45₁, 85, 85₁) et un centre de l'un des renfoncements (25, 25₁, 67, 67₁) est créée de telle manière que des seconds capuchons d'électrode (6, 61) à fournir peuvent être agencés sur un second rayon plus grand que le premier rayon de telle manière que les seconds capuchons d'électrode (6, 6₁) à fournir touchent au moins partiellement l'enveloppe (4, 4₁, 45, 45₁, 85, 85₁) et les premiers capuchons d'électrode (6, 6₁) à fournir.

6. Magasin de capuchons (2, 2₁, 43, 43₁, 83, 83₁) selon l'une quelconque des revendications 4 à 5, dans lequel un dispositif de poussée (30, 30₁, 70, 70₁, 31, 31₁, 72, 72₁) s'étendant au moins partiellement entre la roue (23, 23₁, 65, 65₁, 112, 112₁) et l'enveloppe (4, 4₁, 45, 45₁, 85, 85₁) et conçu pour pousser des premier et second capuchons d'électrode (6, 61) dans le sens de rotation (29) lors d'une rotation dans le sens de rotation (29) est en outre fourni.

7. Magasin de capuchons (2, 2₁, 43, 43₁, 83, 83₁) selon la revendication 6, dans lequel le dispositif de poussée (30, 30₁, 70, 70₁, 31, 31₁, 72, 72₁) comprend un poussoir (30, 30₁, 70, 70₁) présentant une forme extérieure en forme de capuchon d'électrode (6, 6₁) et un dispositif de liaison (31, 31₁, 72, 72₁), dans lequel le dispositif de liaison (31, 31₁, 72, 72₁) relie le poussoir (30, 30₁, 70, 70₁) à la roue (23, 23₁, 65, 65₁, 112, 112₁).

8. Magasin de capuchons (2, 2₁, 43, 43₁, 83, 83₁) selon l'une quelconque des revendications 1 à 7, dans lequel le couvercle (5, 5₁, 46, 46₁, 86, 86₁) comprend un évidement (14, 14₁, 54, 54₁, 94, 94₁) dans la région de mise en place (14, 14₁, 54, 54₁, 94, 94₁).

9. Magasin de capuchons (2, 2₁, 43, 43₁, 83, 83₁) selon l'une quelconque des revendications 1 à 8, dans lequel un dispositif de retenue (16, 16₁, 56, 56₁, 96, 96₁) et un serre-flan (60) destinés à respectivement un capuchon d'électrode (6, 6₁) sont fournis dans la région de mise en place (14, 14₁, 54, 54₁, 94, 94₁).

10. Magasin de capuchons (2, 2₁, 43, 43₁, 83, 83₁) selon l'une quelconque des revendications 1 à 9, comprenant en outre un dispositif de guidage (22, 22₁, 57, 57₁, 97, 97₁) qui s'étend depuis l'espace intérieur (18, 18₁, 62, 62₁, 101, 101₁) jusque dans la région de mise en place (14, 14₁, 54, 54₁, 94, 94₁).

11. Magasin de capuchons (2, 2₁, 43, 43₁, 83, 83₁) selon l'une quelconque des revendications 6 à 10, dans lequel le ressort hélicoïdal (26, 26₁, 68, 68₁, 106, 106₁) est fixé à l'axe (12, 12₁, 52, 52₁, 92, 92₁) et à la roue (23, 23₁, 65, 65₁, 112, 112₁).

12. Unité de magasin de capuchons comprenant des premier et second magasins (2, 2₁, 43, 43₁, 83, 83₁) selon l'une quelconque des revendications 1 à 11, dans laquelle un axe (12, 52, 92) du premier magasin de capuchons (2, 43, 83) et un axe (12₁, 52₁, 92₁) du second magasin de capuchons (2₁, 43₁, 83₁) sont orientés de manière coaxiale, dans laquelle une surface extérieure d'une première plaque de fond (3, 44, 84) du premier magasin de capuchons (2, 43, 83) est orientée vers une surface extérieure d'une seconde plaque de fond (3₁, 44₁, 84₁) du second magasin de capuchons (2, 2₁, 43, 43₁) et dans laquelle une distance (D1) est créée entre la surface extérieure de la première plaque de fond (3, 44, 84) et la surface extérieure de la seconde plaque de fond (3₁, 44₁, 84₁).

13. Unité de magasin de capuchon selon la revendication 12, dans laquelle une plaque d'écartement (61, 100) est fournie entre la surface extérieure de la première plaque de fond (44, 84) et la surface extérieure de la seconde plaque de fond (44₁, 84₁).

14. Unité de magasin de capuchons selon la revendication 12 ou 13, comprenant deux magasins de capuchons (43, 43₁, 83, 83₁) selon l'une quelconque des revendications 7 à 16, dans laquelle l'axe (52, 92) du premier magasin de capuchons (43, 83) présente une cavité (74, 104) et dans laquelle l'axe (52₁, 92₁) du second magasin de capuchons (43₁, 83₁) présente une broche (75, 105).

15. Unité de magasin de capuchons selon la revendication 14, dans laquelle un ressort de compression (90) entourant partiellement la broche (105) est agencé entre une seconde extrémité de l'axe (92) du premier magasin de capuchons (83) et une seconde extrémité de l'axe (92₁) du second magasin de capuchons (83₁).
